# EUROPÄISCHE PATENTSCHRIFT

(11) **EP 3 219 186 B1**
(45) Veröffentlichungstag und Bekanntmachung des Hinweises auf die Patenterteilung: **28.11.2018**
(21) Anmeldenummer: 17161081.9
(22) Anmeldetag: 15.03.2017
(51) Int. Cl.: A01C 7/20, A01C 7/10, A01C 19/00, A01C 5/06

(54) **REIHENEINHEIT EINER LANDWIRTSCHAFTLICHEN MASCHINE UND VERFAHREN ZUM BETREIBEN EINER LANDWIRTSCHAFTLICHEN MASCHINE**
ROW UNIT OF AN AGRICULTURAL MACHINE, AND METHOD FOR OPERATING AN AGRICULTURAL MACHINE
UNITÉ DE RANGÉE POUR UNE MACHINE AGRICOLE ET PROCÉDÉ DE FONCTIONNEMENT D'UNE MACHINE AGRICOLE

(30) Priorität: 17.03.2016 DE 102016204464
(43) Veröffentlichungstag der Anmeldung: 20.09.2017
(73) Patentinhaber: Horsch Maschinen GmbH, 92421 Schwandorf (DE)
(72) Erfinder: HORSCH, Philipp, 92421 Schwandorf (DE)
(74) Vertreter: Benninger, Johannes

(56) Entgegenhaltungen:
- EP-A1- 2 702 849
- EP-A1- 2 805 596
- EP-A1- 2 974 582
- WO-A1-2011/119095
- WO-A1-2017/027372
- US-A1- 2004 134 400
- US-A1- 2009 090 283

## Beschreibung

Die vorliegende Erfindung betrifft eine Reiheneinheit einer landwirtschaftlichen Maschine gemäß dem Oberbegriff des Patentanspruches 1 sowie eine landwirtschaftliche Maschine gemäß dem Oberbegriff des Patentanspruchs 12. Außerdem betrifft die Erfindung ein Verfahren zum Betreiben einer landwirtschaftlichen Maschine mit den Merkmalen des unabhängigen Verfahrensanspruchs 13.

Derartige Reiheneinheiten sind aus dem Stand der Technik bereits in verschiedensten Ausführungen bekannt. So beschreiben bspw. die EP 1 587 355 B1 und die EP 1 587 356 B1 jeweils Reiheneinheiten mit jeweils einer mit einem Differenzdruck betriebenen Dosiervorrichtung, wobei der Differenzdruck hierbei mittels eines an einer Dosierscheibe anliegenden Unterdrucks erzeugt wird. Das Verteilgut wird durch die Dosierscheibe und den Unterdruck vereinzelt und in eine Saatleitung abgegeben. Die Saatleitung weist einen im Wesentlichen j-förmigen Verlauf auf, mit zwei im Wesentlichen geraden Abschnitten, welche durch einen bogenförmigen Abschnitt miteinander verbunden sind. Die Saatleitung besitzt zudem eine Rinne, entlang welcher das Verteilgut in Richtung zu einer Saatfurche gleitet wird. Am Abgabepunkt der Saatleitung zur Saatfurche ist der Saatleitung bzw. dem Saatrohr ein Geschwindigkeitsregulator zugeordnet. Der Geschwindigkeitsregulator ist als Förderrad ausgebildet und weist einen Umfangsbereich auf, welcher an der oder nahe angrenzend zur Saatgutführung positioniert ist, so dass das vom Ausbringsystem in einer voreingestellten Rate aufgenommene Saatgut erfasst und auf eine bestimmte Geschwindigkeit beschleunigt wird. Mit Hilfe dieses Geschwindigkeitsregulators soll das Verteilgut jeweils aktiv derartig beschleunigt werden, dass dieses bei der Übergabe in die Saatfurche vorzugsweise mit der gleichen Geschwindigkeit als die Fahrtgeschwindigkeit der Reiheinheit bewegt wird. Da das Verteilgut während des Gleitens entlang der Rinne des Saatrohrs nicht aktiv beschleunigt wird, kann dieses bspw. durch Stöße und Schläge, welche auf die Reiheinheit bzw. das Saatrohr wirken im Saatrohr verspringen, wodurch sich die Kornabstände bereits im Saatrohr verschlechtern können. Ebenso können durch die schlagartige Beschleunigung die Körner aus der dafür vorgesehenen Saatfurche geschleudert werden. Sowohl bei der EP 1 587 355 B1 wie auch bei der EP 1 587 356 B1 besteht jeweils ein wesentlicher Aspekt bei den dort beschriebenen Anordnungen darin, das vom Ausbringsystem vereinzelt ausgebrachte Saatgut vor der Ablage im Boden zu beschleunigen, wodurch insbesondere die Relativgeschwindigkeit zwischen dem aus dem Saatrohr abgegebenen Saatgut und dem Boden reduziert werden soll. Die aktive Beschleunigung des Saatguts wird dadurch erreicht, dass es sich bei dem jeweils verwendeten Geschwindigkeitsregulator um ein angetriebenes Förderrad handelt, das sich mit einer schnelleren Umfangsgeschwindigkeit dreht als die Ausgangsgeschwindigkeit der Saatkörner.

Vergleichsweise ähnliche Systeme werden durch US 6 651 570 B1, US7 185 596 B2 und US 7 343 868 B2 offenbart.

Durch US 4 002 266A ist eine weitere Reiheneinheit offenbart, bei welcher das Saatgut bei der Ablage in die Saatfurche auf eine vorbestimmte Geschwindigkeit reduziert werden soll. Hierbei ist dem Anfang der Saatleitung ein Geschwindigkeitsregulator zugeordnet, so dass das vereinzelte Saatgut schon weit vor der Ablage in die Saatfurche auf eine bestimmte Geschwindigkeit reduziert wird. Der Geschwindigkeitsregulator ist aus einer Rolle mit einem flexiblen und/oder weichen Material ausgebildet.

Eine weitere Reiheneinheit geht aus der WO 2011 119 095 A1 hervor. Hierbei arbeitet die Dosiervorrichtung nach dem sog. Überdruckprinzip. Diese umfasst eine Kammer für Saatgut, welche Kammer mit einem Überdruck beaufschlagt wird, und welche Kammer von einem Dosierorgan begrenzt wird. Im Dosierorgan sind Aussparungen vorhanden, mittels denen die Kammer mit dem Umgebungsdruck verbunden wird, wodurch eine Druckdifferenz entsteht und dadurch Körner an den Aussparungen festgehalten werden. Ein Saatrohr zum Transport der vereinzelten Körner zu einer Saatfurche weist ebenfalls einen Einlass in der Kammer auf. In dieser Saatgutdosierleitung entsteht mit Hilfe des Überdrucks in der Kammer ein Luftstrom, wodurch die Körner mit einer Beschleunigung durch das Saatrohr in Richtung der Saatfurche "geschossen" werden. Um ein Verspringen der Körner in der Saatfurche zu unterbinden, ist dem Auslass des Saatrohrs ein Fangelement in Form einer Fangrolle nachgeordnet. Zwar kann mit einem derartigen System der Transport des Verteilguts zur Saatfurche wesentlich verbessert werden, jedoch muss die Anordnung der Fangrolle zum Auslass des Saatrohrs eine genau definierte Position aufweisen, um eine optimale Funktion gewährleisten zu können. Auch kann es insbesondere bei feuchten Bedingungen vorkommen, dass an der Fangrolle Erde und Verteilgut anhaften und somit wiederum die Verteilqualität verschlechtert wird.

Ebenso geht aus der DE 6 901 546 T2 eine Reiheneinheit mit einem Saatrohr und nachgeordnetem Fangelement hervor, bei welchem die Körner wiederum mit hoher Geschwindigkeit durch das Saatrohr befördert werden und in der Saatfurche mittels einer Fangrolle, welche den Luftstrom unterbricht, abgebremst werden. Die Fangrolle kann hierbei entweder durch Bodenkontakt oder mit verzögerter Geschwindigkeit angetrieben werden. Da die Körner hierbei jedoch in der Regel erst von der Fangrolle aufgenommen werden, wenn diese bereits in der Saatfurche sind, kann keine zufriedenstellende Abbremsung gewährleistet werden. Ebenso besitzt die Fangrolle keinerlei Kammern und/oder dergl. Elemente, mittels denen die Körner aufgenommen werden könnten, wodurch wiederum die Körner durch die Fangrolle in der Saatfurche verschoben werden können. Des Weiteren kann auch bei der in der DE 6 901 546 T2 beschriebenen Fangrolle, insbesondere bei feuchten Bedingungen, Erde und Verteilgut anhaften, wodurch sich wiederum die Verteilqualität verschlechtern kann.

Aus der EP 2 974 582 A1 geht eine Reiheneinheit mit einer Überdruckdosiereinrichtung und mit einer sich an die Überdruckdosiereinrichtung anschließende Ablageeinrichtung hervor. Die Ablageeinrichtung umfasst eine Luftlenkeinrichtung, mittels welcher ein Förderluftstrom eingestellt werden kann. Weiter ist ein Saatgutfangelement vorgesehen, welches zur Ablageeinrichtung wahlweise zu oder abschaltbar ist. Das Saatgutfangelement dient dazu, das Saatgut in der Furche zu fixieren. Wahlweise kann das Saatgut mit definierter Geschwindigkeit gegen die Fangrolle geschossen und anschließend in der Furche fixiert werden.

Aus der EP 2 805 596 A1 geht eine Sämaschine mit einer Überdruckdosiereinrichtung hervor. An die Überdruckdosiereinrichtung schließt sich eine Saatgutleitung an, welche die Körner zu Ausbringelementen befördert. Bei der Saatgutleitung handelt es sich um eine druckluftbeaufschlagte Saatgutleitung, indem Druckluft über ein separates Gebläse oder über eine andere Drucklufterzeugereinheit zur Saatleitung geführt wird.

Eine weitere Reiheneinheit einer landwirtschaftlichen Maschine ist in der US 2017/ 0034995 A1 offenbart.

Angesichts des bekannten Standes der Technik kann eine Aufgabe der vorliegenden Erfindung darin gesehen werden, eine Reiheneinheit einer landwirtschaftlichen Maschine und eine landwirtschaftliche Maschine sowie ein Verfahren zu deren Betrieb zur Verfügung zu stellen, welche einen verbesserten Verteilguttransport in einem Saatrohr ermöglichen, wobei die Reiheneinheit eine Einrichtung zur Verbesserung des Verteilguttransports aufweist, welche unabhängig von Bodenbedingungen arbeitet.

Diese Aufgabe wird erfindungsgemäß durch eine Reiheneinheit mit den Merkmalen des unabhängigen Anspruchs 1, durch eine landwirtschaftliche Maschine mit den Merkmalen des abhängigen Anspruchs 12 und durch ein Verfahren mit den Merkmalen des Anspruchs 13 gelöst. Weitere vorteilhafte Ausgestaltungen und Weiterbildungen der Erfindung sind in den jeweiligen abhängigen Ansprüchen beschrieben.

Zur Lösung der Aufgabe schlägt die Erfindung eine Reiheneinheit vor, welche in landwirtschaftlichen Maschinen, insbesondere zur Aussaat und Verteilung von granulatartigem Verteilgut wie Saatgut und/oder Dünger Verwendung findet. An derartigen landwirtschaftlichen Maschinen ist in der Regel in weitgehend gleichen Abständen zueinander eine Mehrzahl von erfindungsgemäßen Reiheneinheiten angebracht. Die Reiheneinheit umfasst einen die Komponenten der Reiheneinheit tragenden Scharrahmen. Die Reiheneinheit kann vorzugsweise über eine Parallelogrammanordnung schwenkbar an einer Rahmenkonstruktion der Maschine montiert sein. Dem Parallelogramm kann bspw. ein hydraulischer und/oder pneumatischer und/oder elektrischer Stellantrieb oder Zylinder zugeordnet sein, mittels welchem zum einen die Reiheneinheit verschwenkt und zum anderen ein definierter Schardruck auf die Reiheinheit während der Feldfahrt ausgeübt werden kann. Die Reiheinheit weist darüber hinaus furchenziehende Werkzeuge wie Sechscheiben, Zinken oder dergl. auf. Insbesondere sind als furchenziehende Werkzeuge zwei in einem Winkel zueinander angebrachte Sechscheiben vorgesehen. Zwischen diesen Sechscheiben und/oder neben oder hinter den furchenziehenden Werkzeugen ist ein Saatrohr anbracht, mittels welches das von einer Dosiervorrichtung in der Regel weitgehend vereinzelte Verteilgut in Richtung der Saatfurche transportiert wird.

Die pneumatisch arbeitende Dosiervorrichtung arbeitet auf dem Überdruckdruckprinzip und dient zur vereinzelten Abgabe von Verteilgut, wobei das Verteilgut mittels eines Überdrucks der Dosiervorrichtung an ein zu einer Saatfurche transportierendes Saatrohr beschleunigt abgegeben wird. Die Dosiervorrichtung kann bspw. Teil der Reiheneinheit, aber auch von dieser beabstandet sein und bspw. an einem Rahmen der Maschine montiert sein. Auch könnte eine Dosiervorrichtung eine Mehrzahl von Reiheneinheiten mit dem jeweiligen Verteilgut versorgen. Auch kann die Dosiervorrichtung sowohl nach dem Differenzdruckprinzip als auch nach dem Fliehkraftprinzip oder auch mechanisch arbeiten. Auch Kombinationen aus verschiedenen Vereinzelungsprinzipien wären vorstellbar. In einer bevorzugten Ausführungsvariante kann seitlich neben den furchenziehenden Werkzeugen wenigstens eine, vorzugsweise jedoch zwei, Tiefenführungsräder angebracht sein, mittels welchen sowohl die Eindringtiefe der furchenziehenden Werkzeuge in die Ackerfläche und somit die Arbeitstiefe definiert wird als auch diese konstant gehalten wird.

Ebenso wäre es auch vorstellbar, dass ein Tiefenführungsrad zwischen zwei Reiheneinheiten und/oder zwischen zwei furchenziehenden Werkzeugen angebracht ist. Dies ist insbesondere dann von Vorteil, wenn bspw. an einem Scharrahmen zwei in einem Abstand zueinander angeordnete furchenziehende Werkzeuge, Saatrohre und Druckrollen angebracht sind. Dem Ausgang des Saatrohrs kann ein Fangelement bspw. in Form einer Fangrolle nachgeordnet sein. Durch dieses Fangelement soll zum einen das teilweise mit großer Geschwindigkeit durch das Saatrohr beförderte Verteilgut abgebremst bzw. ein Verrollen dieses in der Saatfurche verhindert werden und zum anderen das Verteilgut im Boden eingebettet werden. Nachfolgend an die Ablage des Verteilguts kann die Reiheinheit mit diversen Druckrollen oder dergl. versehen sein, mittels denen sowohl die Saatfurche verschlossen als auch das Verteilgut in den Boden gedrückt wird, um somit optimale Keimbedingungen zu erhalten. Die Druckrollen können bspw. in einem Winkel zueinander und schwenkbar an der Reiheinheit montiert sein. Auch kann die Kraft dieser Druckrollen bspw. mittels Federn oder Stellgliedern oder dergl. variiert werden. Die Komponenten der Reiheinheit werden jeweils an einem Scharrahmen montiert.

Gemäß einem optionalen Aspekt der Erfindung kann die Fangrolle aus der Reiheneinheit entnommen werden, bzw. so in diese gebaut werden, dass diese nur optional verwendet wird. Dies ist insbesondere bei feuchten Bedingungen von Vorteil. Um dennoch das mit erhöhter Geschwindigkeit durch das Saatrohr beförderte Verteilgut vor der Abgabe dieses in die Saatfurche abbremsen zu können, ist dem Auslass des Saatrohrs eine Verzögerungseinheit zugeordnet, welche durch mindestens eine drehbare Rolle mit Bürsten oder mit Kammern oder durch ein flexibles und/oder weiches Material gebildet ist. Die Verzögerungseinheit ist hierbei dem Saatrohr vorzugsweise derartig zugeordnet, dass das entlang des Saatrohrs bzw. einer Gleitfläche mit erhöhter Geschwindigkeit beförderte Verteilgut von der Verzögerungseinheit auf eine gewünschte Geschwindigkeit reduziert wird. Diese Geschwindigkeit entspricht vorzugsweise der Fahrtgeschwindigkeit.

Die Abgaberichtung des Verteilguts aus dem Saatrohr ist vorzugsweise parallel zur Saatfurche bzw. parallel zur Fahrtrichtung. Dementsprechend ist auch die Verzögerungseinheit parallel zur Fahrtrichtung angebracht.

Die Beschleunigung des Verteilguts in der Kornabgabe oder im Saatrohr erfolgt mittels des in der Dosiervorrichtung vorherrschenden Überdrucks, wobei die Geschwindigkeit hierbei insbesondere größer als die Erdbeschleunigung gewählt ist. Durch diese Beschleunigung kann ein sicherer und reibungsloser Transport der Körner im Saatrohr ohne ein Verspringen dieser in Richtung zur Saatfurche erfolgen. Um jedoch ein Verrollen bzw. Verspringen der Körner in der Saatfurche durch die erhöhte Transportgeschwindigkeit zu vermeiden, werden die Körner unmittelbar vor Abgabe, mittels einer dem Saatrohr zugeordnete Verzögerungseinheit abgebremst. Die Verzögerungseinheit ist durch mindestens eine drehbare Rolle gebildet, welche mit Bürsten und/oder mit Kammern ausgestattet sein kann, um die Körner während der Umdrehungen der Rolle fixieren und mitnehmen zu können. Die drehbare Rolle der Verzögerungseinheit kann insbesondere durch ein flexibles und/oder weiches Material ausgebildet sein, was bei der zuverlässigen Fixierung und/oder Mitnahme der Körner während der Rotation der Rolle weitere Vorteile mit sich bringen kann.

Mittels der Verzögerungseinheit wird somit eine Reiheneinheit geschaffen, welche sowohl bei feuchten und nassen als auch bei trockenen Bodenbedingungen eingesetzt werden kann, ohne das es hierbei zu einer Verschlechterung der Verteilqualität kommt.

Eine nicht erfindungsgemäße Beschleunigungseinrichtung könnte bspw. als sog. Ringdüse ausgeführt sein. Auch wäre ein zusätzlicher Luftanschluss im Saatrohr zur Beschleunigung vorstellbar. Ebenso denkbar wäre eine mechanisch arbeitende Beschleunigungseinrichtung, bei der das Verteilgut bspw. mittels einer Drehbewegung beschleunigt wird. So könnte bspw. ein Aufbau der Dosiervorrichtung bzw. der Reiheneinheit so gestaltet sein, dass das Verteilgut zunächst mittels einer nach dem Differenzdruckprinzip mit Über- oder Unterdruck oder mittels einer mechanischen oder mit Zentrifugalkraft arbeitenden Dosiervorrichtung vereinzelt wird. Das vereinzelte Verteilgut könnte anschließend in eine Beschleunigungseinrichtung übergegeben werden, in welcher das Verteilgut bspw. mittels einer dieser zugeordneten Beschleunigungsscheibe beschleunigt wird und in ein Saatrohr abgegeben wird. Unmittelbar vor der Abgabe des Verteilguts in die Saatfurche ist der Reiheneinheit eine Verzögerungseinrichtung zu geordnet, mittels der das Verteilgut eine aktive Abbremsung erfährt.

Auch könnte die Dosiervorrichtung derartig gestaltet sein, dass Verteilgut durch hohe Rotationsgeschwindigkeiten eines in dieser rotierenden Dosierorgans vereinzelt wird und durch die Rotationsgeschwindigkeit ebenfalls beschleunigt wird und in ein Saatrohr abgegeben wird.

Insbesondere wäre es auch denkbar, die Reiheneinheit derartig zu gestalten, dass sowohl die Fangrolle als auch die Verzögerungseinheit in dieser montiert werden könnten und entweder beide Komponenten gemeinsam oder in Abhängigkeit der Bodenbedingungen nur die Verzögerungseinheit verwendet wird/werden.

Das Verteilgut erfährt somit zwischen der Abgabe der Dosiervorrichtung und der Abgabe aus dem Saatrohr zunächst eine aktive Beschleunigung, welche mittels eines Überdrucks in der Dosiervorrichtung erzeugt wird und mit erhöhter Geschwindigkeit durch das Saatrohr befördert wird. Unmittelbar vor Abgabe dieses in die Saatfurche wird es dann mittels der Verzögerungseinheit aktive auf eine Geschwindigkeit abgebremst, welche bspw. weitgehend identisch zur Fahrtgeschwindigkeit ist.

Weiter ist erfindungsgemäß vorgesehen, dass das Saatrohr eine Gleitfläche aufweist, entlang derer das Verteilgut in Richtung zur Verzögerungseinheit gleitet, und dass die Verzögerungseinheit in Bezug auf diese Gleitfläche derartig angeordnet ist, dass der Umfang der Kammern und/oder Bürsten entlang dieser Gleitfläche rotiert.

Die Verzögerungseinheit kann derartig gebildet sein, dass diese sowohl bei einem sichelförmigen als auch bei einem geraden Saatrohr verwendet werden kann. Hierzu kann vorgesehen sein, dass der Außenumfang der Kammern oder der Bürsten sich entlang einer Gleitfläche des Saatrohrs bewegen.

Es kann vorgesehen sein, dass das Saatrohr keilförmig ausgebildet ist oder sich in Transportrichtung im Bereich und/oder in der Nähe des Verzögerungseinheit verjüngt, wodurch eine keilförmige Gleitfläche ausgebildet wird. Entlang der keilförmigen Gleitfläche kann sich die Außenkontur der Verzögerungseinheit bewegen bzw. rotieren. Wahlweise kann auch eine Kombination der verschiedenen Ausführungsformen des Saatrohrs erfolgen, wonach das Saatrohr zumindest abschnittsweise sichelförmig, gerade und/oder keilförmig ausgebildet sein kann. Weiter kann vorgesehen sein, dass das Saatrohr durch eine Saatrohrrinne ausgebildet ist, welche Saatrohrrinne an die Außenkontur der Verzögerungseinheit angepasst ist. Die Verzögerungseinheit kann vorzugsweise zylindrisch ausgebildet sein. Die Außenkontur der Verzögerungseinheit kann auch andere Formen ausbilden.

Der hier als keilförmige Gleitfläche bezeichnete Übergangsbereich, wo die im Saatrohr geförderten Körner des Verteilgutes tangential auf die rotierende Verzögerungseinheit treffen und in deren Außenumfang hineintreten bzw. dort durch die Bürsten, Kammern und/oder elastischen Bereiche aufgenommen werden, dient in erster Linie einer nicht zu abrupten Kontaktierung der Verzögerungseinheit durch die Körner des Verteilgutes, die durch die keilförmige Gleitfläche relativ weich abgebremst werden, ohne dass die Gefahr eines Abprallens oder einer anderen unkontrollierten Bewegungskomponente auftritt.

Die keilförmige Gleitfläche kann in einer Seitenansicht eine keilförmige Kontur aufweisen, wobei jedoch auch eine Verzögerungseinheit mit abgerundeten äußeren Kanten vorstellbar ist, die mit einer entsprechend rinnenförmigen oder hohlkehlenartigen Kontur des Saatrohrs korrespondieren und dort aufgenommen sein kann, so dass der gewünschte tangentiale Übergangsbereich zwischen Saatrohr und Verzögerungseinheit ausgebildet wird.

Das Saatrohr weist entlang der Längserstreckung ein freies Ende auf, welches mit der Verzögerungseinheit abschließt bzw. in diese übergeht oder über die Verzögerungseinheit hinausragt. Das Saatrohr kann somit unterschiedliche Längen ausbilden. Das freie Ende des Saatrohrs kann sich in Richtung des Bodens erstrecken.

Zum Antreiben der Verzögerungseinheit kann dieser ein Motor zugeordnet sein. Die Verzögerungseinheit kann einen Direktantrieb umfassen, wonach der Direktantrieb in der Nabe der mindestens einen Rolle angeordnet ist. Damit kann die Verzögerungseinheit durch einen Nabenantrieb angetrieben werden. Ebenso wäre es denkbar, dass die Verzögerungseinheit mit einem Bodenantrieb versehen ist. Ebenso vorstellbar wäre es, dass die Verzögerungseinheit eine Übertragungseinrichtung aufweist, mittels welcher bspw. die Bewegung einer Sechscheibe oder einer Druckrolle oder eine Tiefenführungsrolle auf diese übertragen wird. Hierzu könnte die Übertragungseinrichtung bspw. mit einem zusätzlichen Getriebe versehen sein.

Um eine sichere Verteilgutaufnahme durch die Kammern bzw. die Bürsten der Verzögerungseinheit zu gewährleisten, kann die Bewegung dieser bspw. mittels einer Synchronisierungseinrichtung mit der Bewegung bspw. einer Dosierscheibe der Dosiervorrichtung oder mit der Kornabgabe synchronisiert werden. Auch wäre es denkbar, dass mittels eines Saatflusssensors jeweils die Kornabgabe und mittels einer Rechnereinheit die Geschwindigkeit bis zum Erreichen der Verzögerungseinheit ermittelt wird. Somit wird eine Beeinträchtigung der Verteilqualität durch die Kornaufnahme der Verzögerungseinheit vermieden.

Insbesondere kann die Drehgeschwindigkeit der Verzögerungseinheit auf Basis einer Vorfahrtsgeschwindigkeit der Reiheneinheit bzw. der Reiheneinheit geregelt werden, so dass die Körner mittels der Verzögerungseinheit auf eine Geschwindigkeit abgebremst werden, die weitgehend identisch zur Fahrtgeschwindigkeit der Reiheneinheit ist. Hierzu können an der Maschine bspw. Geschwindigkeitssensoren oder dergl. Geschwindigkeitsaufnehmer angebracht sein und die ermittelte Geschwindigkeit anschließend mittels einer Rechnereinheit auf die Drehgeschwindigkeit der Verzögerungseinheit umgerechnet werden. Auf Basis der Werte der Rechnereinheit kann anschließend die Verzögerungseinheit angesteuert werden.

Die Erfindung betrifft weiter eine landwirtschaftliche Maschine zur Verteilung von granulatartigem Verteilgut wie Saatgut und/oder Dünger, die mindestens zwei, insbesondere ein Mehrzahl von in regelmäßigen Abständen nebeneinander oder versetzt nebeneinander angeordnete Reiheneinheiten gemäß einem der Ansprüche 1 bis 11 aufweist.

Die Erfindung betrifft schließlich ein Verfahren zum Betreiben einer landwirtschaftlichen Maschine, die mit mindestens einer Reiheneinheit zur Verteilung von granulatartigem Verteilgut wie Saatgut und/oder Dünger ausgestattet ist, wobei die Komponenten der Reiheneinheit einem tragenden Scharrahmen zugeordnet sind, und wobei die Reiheneinheit eine mit Überdruck arbeitende und/oder auf einem Überdruckprinzip basierende pneumatische Dosiervorrichtung zur vereinzelten Abgabe von Verteilgut sowie furchenziehende Werkzeuge, insbesondere in Form zweier in einem Winkel zueinander angeordneter Sechscheiben, umfasst. Außerdem ist ein Saatrohr zwischen und/oder neben den furchenziehenden Werkzeugen und/oder den Sechscheiben angeordnet. Die dem Verfahren zugrunde liegende Reiheneinheit umfasst weiterhin eine dem Saatrohr zugeordnete Verzögerungseinheit und eine die Saatfurche schließende Druckrolle, wobei die Verzögerungseinheit durch mindestens eine drehbare Rolle mit Bürsten und/oder mit Kammern und/oder mit elastischen Bereichen aus flexiblem und/oder weichem Material gebildet ist. Das Verfahren sieht vor, dass das Verteilgut zwischen der Abgabe vom Dosierorgan und der Abgabe aus dem Saatrohr in den Boden aktiv beschleunigt und mit erhöhter Geschwindigkeit entlang des Saatrohrs transportiert wird, wonach das Verteilgut auf seinem weiteren Transportweg vor der Abgabe in die Saatfurche mittels der Verzögerungseinheit aktiv abgebremst wird.

Das erfindungsgemäße Verfahren kann insbesondere mit einer Reiheneinheit gemäß einer der zuvor beschriebenen Ausführungsvarianten und/oder mit einer landwirtschaftlichen Maschine wie oben beschrieben durchgeführt werden.

Im Übrigen können alle Aspekte, die im Zusammenhang mit einer der Ausführungsvarianten der erfindungsgemäßen Reiheneinheit und/oder mit der landwirtschaftlichen Maschine genannt und erläutert wurden, auch auf das erfindungsgemäße Verfahren Anwendung finden. Aus diesem Grund sollen alle Merkmale, Aspekte und Varianten, die im Zusammenhang mit einer der Ausführungsvarianten der erfindungsgemäßen Reiheneinheit und/oder mit der landwirtschaftlichen Maschine genannt und erläutert wurden, als im Zusammenhang mit dem erfindungsgemäßen Verfahren als offenbart gelten.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in einer schematischen Perspektivansicht eine landwirtschaftliche Maschine mit einer Mehrzahl von Reiheneinheiten.
Fig. 2 zeigt in einer schematischen Perspektivansicht eine Ausführungsvariante einer Reiheneinheit.
Fig. 3 zeigt eine Seitenansicht einer Reiheneinheit mit austauschbarer Kufe.
Fig. 4 zeigt eine Detailansicht einer austauschbaren Kufe in Arbeitsposition.
Fig. 5 zeigt eine Detailansicht einer austauschbaren Kufe mit verformtem Verriegelungselement und teilweise demontierter Kufe.
Fig. 6 zeigt eine schematische Perspektivansicht einer Dosiervorrichtung mit Saatrohr.
Fig. 7 zeigt eine schematische Perspektivansicht einer Dosiervorrichtung mit geöffnetem Gehäuse.
Fig. 8 zeigt in drei Seitenansichten eine Ausführungsvariante einer Dosiervorrichtung, wobei:
Fig. 8A diese mit Gehäusedeckel zeigt.
Fig. 8B diese ohne Gehäusedeckel und Dosierscheibe zeigt.
Fig. 8C diese ohne Gehäusedeckel und Dosierscheibe sowie mit verschwenkter Kornabgabe zeigt.
Fig. 9 zeigt in zwei Schnittansichten jeweils eine Dosiervorrichtung und ein Saatrohr mit Saatflusssensor mit verschiedenen Kornabgaben wobei:
Fig. 9A hierbei eine Kornabgabe mit geringem Durchmesser D1 zeigt.
Fig. 9B hierbei eine Kornabgabe mit großem Durchmesser D2 zeigt.
Fig. 10 zeigt eine schematische Perspektivansicht eines Saatflusssensors.
Fig. 11 zeigt eine Schnittansicht eines Saatflusssensors.
Fig. 12 zeigt eine Seitenansicht einer Reiheneinheit mit einer bürstenartigen Verzögerungseinheit und geradem Saatrohr.
Fig. 13 zeigt eine Seitenansicht einer Reiheneinheit mit einer bürstenartigen Verzögerungseinheit und sichelförmigem Saatrohr.
Fig. 14 zeigt eine Seitenansicht einer Reiheneinheit mit einer Kammern aufweisenden Verzögerungseinheit und linearem Saatrohr.
Fig. 15 zeigt eine Seitenansicht einer Reiheneinheit mit einer Kammern aufweisenden Verzögerungseinheit und sichelförmigem Saatrohr.
Fig. 16 zeigt in zwei Seitenansichten einen Abgabebereich mit Verzögerungseinheit einer Reiheneinheit wobei:
Fig. 16A diesen mit einer Kammern aufweisenden Verzögerungseinheit zeigt.
Fig. 16B diesen mit einer bürstenartigen Verzögerungseinheit zeigt.
Fig. 17 zeigt eine Seitenansicht im Schnitt einer Reiheneinheit mit Kufe, Saatrohr und Düngerrohr.
Fig. 18 zeigt eine Detailansicht einer Dosiervorrichtung mit Saatrohr mit zugeordneter Kufe, zugeordnetem Düngerrohr und nachgeordneter Saatgutandruckrolle.
Fig. 19 zeigt eine Detailansicht der Anordnung der Kufe des Düngerrohrs und des Saatrohrs zu einer Saatgutandruckrolle.
Fig. 20 zeigt eine weitere Ausführungsform des Saatrohrs sowie dessen Anordnung in Bezug auf die Verzögerungseinheit.
Fig. 21 zeigt eine weitere Ausführungsform des Saatrohrs sowie dessen Anordnung in Bezug auf die Verzögerungseinheit.
Fig. 22 zeigt eine weitere Ausführungsform des Saatrohrs sowie dessen Anordnung in Bezug auf die Verzögerungseinheit.

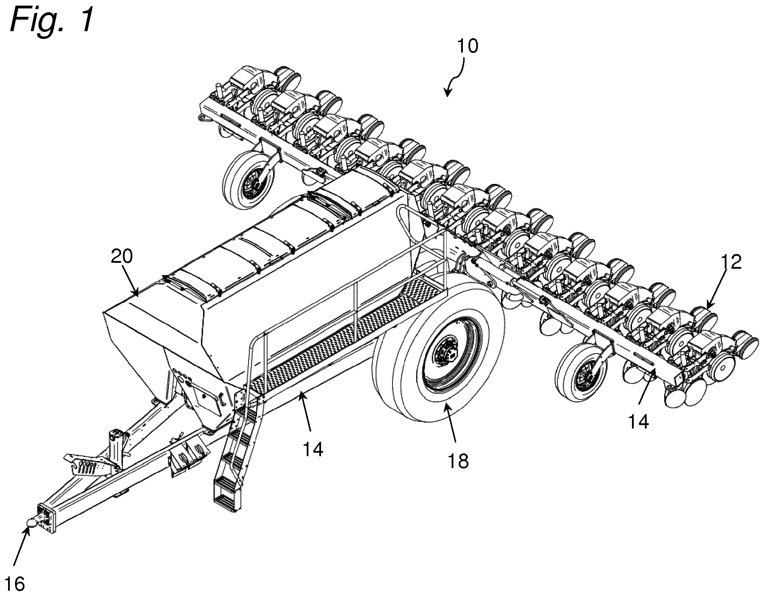

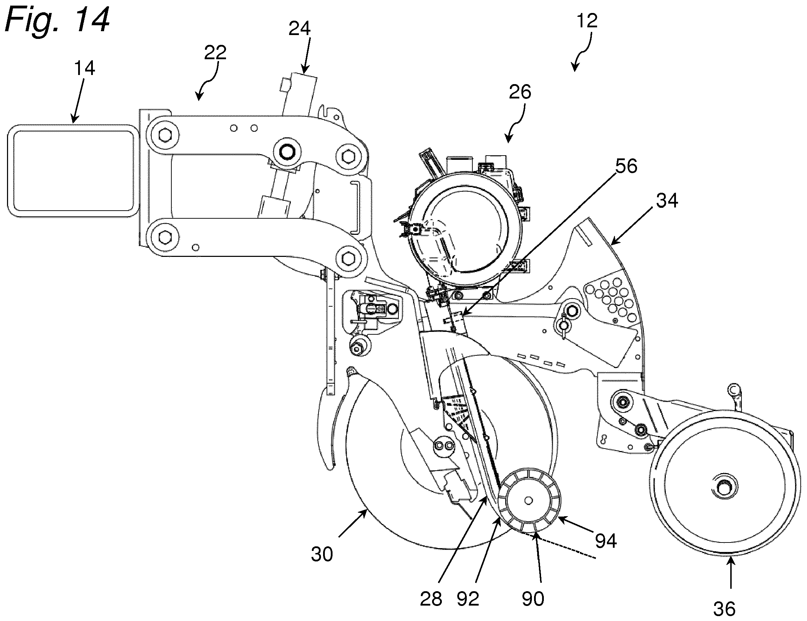

Für gleiche oder gleich wirkende Elemente der Erfindung werden in den Figuren 1 bis 22 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Reiheneinheit ausgestaltet sein kann und stellen keine abschließende Begrenzung dar.

Die Fig. 1 zeigt in einer schematischen Perspektivansicht eine landwirtschaftliche Maschine 10 mit einer Mehrzahl von in regelmäßigen Abständen zueinander angebrachten Reiheneinheiten 12, welche Reiheneinheiten 12 an einem Rahmen 14 der landwirtschaftlichen Maschine 10 montiert sind. Die Maschine 10 kann mittels einer Zugvorrichtung 16 mit einem hier nicht dargestellten Zugfahrzeug verbunden werden und mittels diesem über eine landwirtschaftliche Fläche gezogen werden, wofür am Rahmen 14 zusätzliche Räder 18 angebracht sind. Die Maschine 10 weist weiterhin einen Vorratsbehälter 20 zum Mitführen und Bevorraten des jeweils mittels der landwirtschaftlichen Maschine 10 auszubringenden Verteilguts in Form von Saatgut und/oder Dünger auf. Das Verteilgut wird mittels eines Fördersystems zu den Reiheneinheiten 12 befördert, wobei auch denkbar wäre, dass jeder Reiheneinheit 12 ein separater Vorratsbehälter zugeordnet ist.

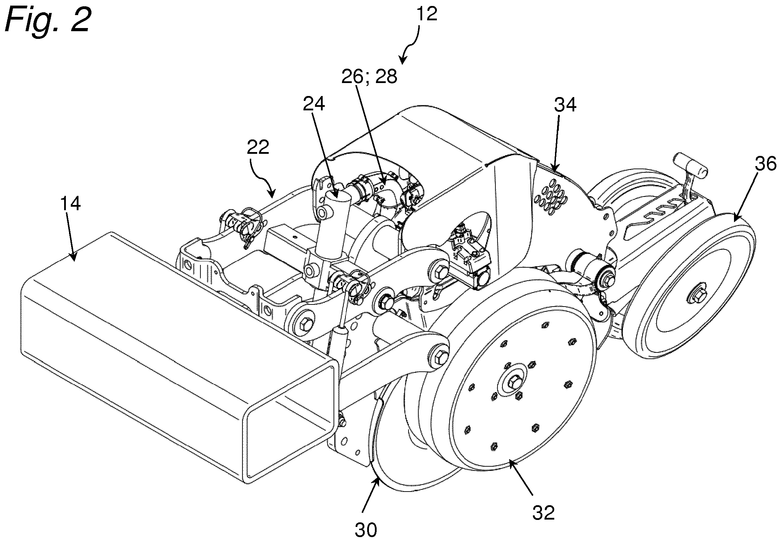

Eine Ausführungsvariante einer Reiheneinheit 12 geht aus der Perspektivansicht der Fig. 2 hervor. Die Reiheneinheit 12 wird über ein Parallelogramm 22 an einem schematisch dargestellten Rahmen 14 der landwirtschaftlichen Maschine 10 montiert, wobei dieses zur Tiefenverstellung bzw. zur Definition eines Schardrucks der Reiheneinheit 12 mit einem Zylinder 24 versehen ist. Die Reiheneinheit 12 der Fig. 2 dient insbesondere zur vereinzelten Abgabe von Verteilgut in eine Saatfurche, wobei die Reiheneinheit 12 hierfür u. a. eine Dosiervorrichtung 26 zur Vergleichmäßigung des Verteilguts besitzt sowie ein hier nicht dargestelltes Saatrohr 28 zum Transport des vergleichmäßigten Verteilguts zu einer mittels Sechscheiben 30 geformten Saatfurche. Neben den Sechscheiben 30 ist zur Tiefenführung der Reiheinheit 12 wenigstens ein Tiefenführungsrad 32 angebracht, welche drehbar mit einem Scharrahmen 34 verbunden ist, welcher zur Montage der Komponenten der Reiheinheit 12 dient. Am hinteren Ende der Reiheneinheit 12 befinden sich zwei V-förmig zueinander angeordnete Druckrollen 36, mittels welchen zum einen die Saatfurche verschlossen und zum anderen das jeweilige Verteilgut im Boden angedrückt wird.

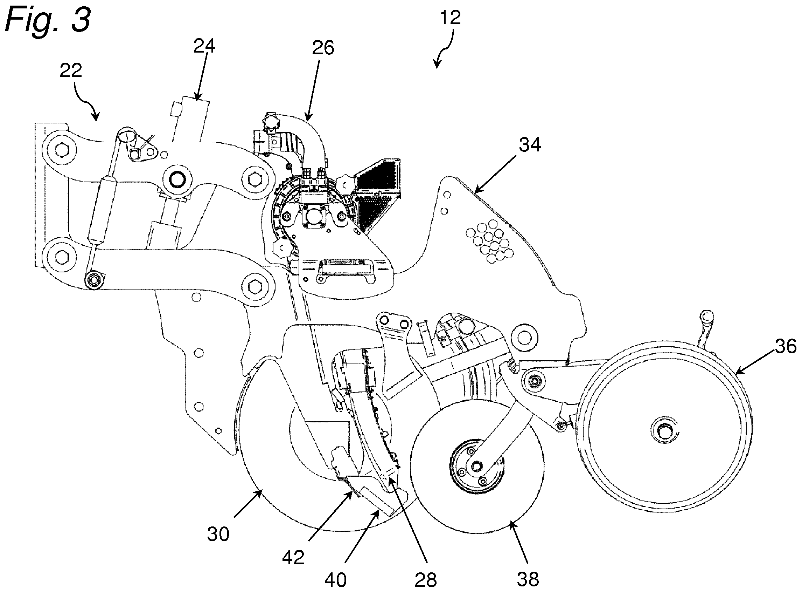

Darüber hinaus geht aus der Seitenansicht der Fig. 3 eine weitere Ausführungsvariante einer Reiheneinheit 12 hervor, bei der zum besseren Verständnis einige Teile ausgeblendet wurden. Die Reiheneinheit 12 besitzt zunächst wiederum ein Parallelogramm 22, mittels welchem diese schwenkbar an einem hier nicht dargestellten Rahmen montiert werden kann. Die jeweilige Höhenposition sowie der Schardruck der Reiheneinheit 12 kann mittels eines Zylinders 24 eingestellt werden. Die Reiheneinheit 12 weist weiter als furchenziehende Werkzeuge zwei V-förmig zueinander angeordnete Sechscheiben 30 auf, wobei hier auch andere Werkzeuge wie Zinken oder nur eine Sechscheibe 30 vorstellbar wären. Ebenso könnten die Sechscheiben 30 versetzt zueinander angebracht sein. Zwischen den Sechscheiben 30 ist ein Saatrohr 28 angebracht, mit welchem das von einer Dosiervorrichtung 26 weitgehend vereinzelte Verteilgut zur Saatfurche befördert wird. Die Dosiervorrichtung 26 kann hierbei verschiedenste Funktionsprinzipien aufweisen. So wären bspw. Differenzdrucksysteme denkbar. Auch wären mechanische- oder fliehkraftbasierte Systeme vorstellbar. Dem Ausgang des Saatrohrs 28 nachgeordnet ist ein Fangelement 38 in Form einer Fangrolle 38. Durch diese Fangrolle 38 soll zum einen das vorzugsweise mit erhöhter Geschwindigkeit durch das Saatrohr beförderte Verteilgut abgebremst sowie ein Verrollen dieses in der Saatfurche verhindert werden und zum anderen das Verteilgut im Boden eingebettet werden. Am hinteren Ende der Reiheneinheit 12 befinden sich noch zwei V-förmig zueinander angeordnete Druckrollen 36, mittels welchen zum einen die Saatfurche verschlossen und zum anderen das jeweilige Verteilgut im Boden angedrückt wird.

Um zum einen zu gewährleisten, dass die Saatfurche ausreichend weit geöffnet ist und zum anderen, um Kluten und Bodenrückstände ausreichend aus der Saatfurche zu entfernen, besitzt die Reiheneinheit 12 zusätzlich eine Kufe 40, wobei die Kufe 40 je nach Bodenbedingungen und Feuchte des Bodens hierbei jeweils unterschiedlichste Formen und Konturen aufweisen kann. Auch kann die Kufe 40 komplett aus der Reiheneinheit 12 entnommen werden. Um dies für eine Bedienperson möglichst einfach zu gestalten, erfolgt die Sicherung bzw. die Montage der Kufe mit Hilfe eines weitgehend elastischen Verriegelungselements 42. Das Verriegelungselement 42 kann hierbei derartig ausgebildet sein, dass dieses werkzeuglos geöffnet bzw. geschlossen werden könnte. Insbesondere kann das Verriegelungselement 42 aus einem elastischen Metall gefertigt sein.

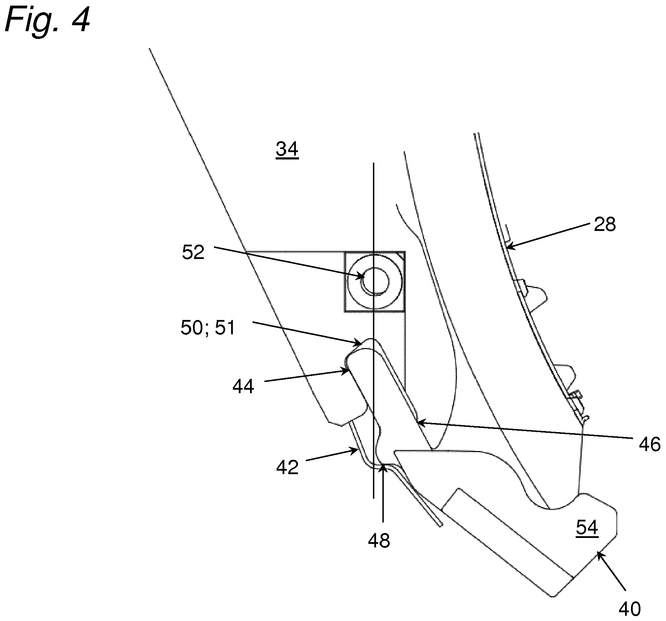

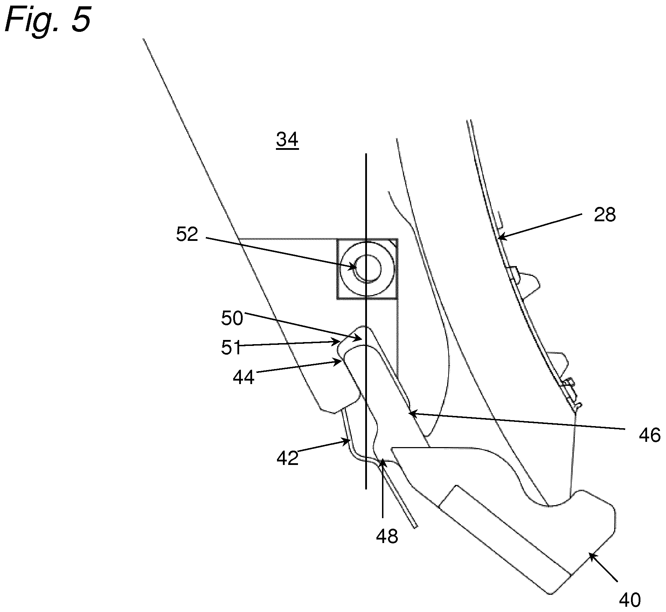

Die Funktionsweise bzw. die Montage der Kufe 40 mit Hilfe des Verriegelungselements 42 geht aus den Detailansichten der Figuren 4 und 5 hervor. Die Fig. 4 zeigt hierbei eine Kufe 40, welche in einer Aufnahmeöffnung 50, welche Teil des Scharrahmens 34 ist, eingeführt ist. Die Aufnahmeöffnung 50 besitzt hierbei zumindest zwei Führungsflächen 44, 46, eine vordere 44 und eine hintere Führungsfläche 46. Mittels dieser Führungsflächen 44, 46 können die jeweils in Fahrtrichtung bzw. in axialer Richtung wirkenden Kräfte aufgenommen werden. Somit bildet die Kufe 40 in der Aufnahmeöffnung 50 in ausgehobener Position der Reiheneinheit 12 eine Formschlussverbindung sowie in abgesenkter Arbeitsposition eine Formschluss- und Kraftschlussverbindung. Um ein Herauswandern der Kufe 40 aus der Aufnahmeöffnung 50 zu unterbinden, ist diese mittels eines elastischen Klemmelements 42 fixiert. Das Verriegelungselement 42 sowie die Kufe 40 weisen hierzu zur besseren Befestigung jeweils einen Absatz 48 auf, welche zusammen wiederum eine Formschlussverbindung bilden. Ebenso ist die Aufnahmeöffnung 50 in deren Querschnitt größer gefertigt als die Kufe 40, wodurch Fertigungstoleranzen ausgeglichen werden und eine Montage erleichtert werden kann.

Darüber hinaus weist die Aufnahmeöffnung 50 eine Anschlagfläche 51 auf, wodurch erreicht wird, dass die Kufe 40 nicht zu weit in diese hinein geschoben wird. Die Anschlagfläche 51 in der Aufnahmeöffnung 50 ist insbesondere so angeordnet, dass die Absätze 48 des Verriegelungselements 42 und der Kufe 40, wenn diese an der Anschlagfläche 51 anliegt, ineinander greifen, wodurch wiederum eine Montage der Kufe 40 erleichtert wird.

Soll die Kufe 40 entnommen bzw. getauscht werden, wird das Verriegelungselement 42 entsprechend verformt bzw. geöffnet, wodurch die Kufe 40 aus der Aufnahmeöffnung 50 entnommen werden kann (vgl. Fig. 5). Das Klemmelement 42 ist vorzugsweise aus einem elastischen metallischen Material wie bspw. einem Federblech gefertigt. Es wären jedoch auch andere Materialen denkbar, welche nach Verformung dieses wieder in deren ursprüngliche Form übergehen. Ebenso ist dieses so gefertigt, dass dieses in montierter Position der Kufe 40 eine Vorspannkraft auf dieses ausübt. Das Verriegelungselement 42 ist insbesondere derartig gebildet, dass ein Öffnen dieses durch Verformung dieses erreicht wird, wobei die Verformung dieses insbesondere werkzeuglos erfolgen kann. Somit wird durch das elastische Verriegelungselement 42 ein schneller Wechsel der Kufe 40 ermöglicht und somit die Anpassung der Reiheneinheit 12 auf entsprechende Bodenbedingungen wesentlich verbessert.

Die seitliche Führung der Kufe 40 erfolgt vorzugsweise mittels der Sechscheiben 30, welche jeweils seitlich zu dieser angebracht sind. Es wäre jedoch ebenso denkbar, dass bspw. der Scharrahmen 34 so gefertigt ist, dass dieser auch die seitliche Führung übernimmt, was bspw. durch seitliche Führungsflächen oder Seitenwände erfolgen kann.

Um ein Herauswandern oder ein Öffnen des Verriegelungselements 42 durch Drehbewegungen der Sechscheiben 30 zu verhindern, ist der Absatz 48 dieses hinter dem Mittelpunkt bzw. dem Drehpunkt 52 der Sechscheiben 30 angeordnet. Somit wird erreicht, dass durch Rotation der Sechscheibe 30 die Kufe 40 in die Aufnahmeöffnung 50 hineingetrieben wird. Dies kann zusätzlich dadurch verstärkt werden, dass bspw. die vordere Führungsfläche 44 zumindest abschnittsweise vor dem Drehpunkt 52 und die hintere Führungsfläche 46 zumindest abschnittsweise hinter dem Drehpunkt 52 angeordnet ist. Ebenso ist die Aufnahmeöffnung 50 unterhalb des Drehpunkts 52 der Sechscheiben 30 angeordnet, wodurch die Montage durch die gute Erreichbarkeit erleichtert wird.

Die Kufe 40 weist in dessen hinterem Bereich zumindest zwei Stege 54 auf, zwischen welche Stege 54 der Ausgang des Saatrohrs 28 hineinragt. Somit wird das Saatrohr 28 insbesondere jedoch dessen Ausgang vor Beschädigungen, Verschleiß und dergl. geschützt, wodurch die Standzeit des Saatrohrs 28 entsprechend erhöht wird.

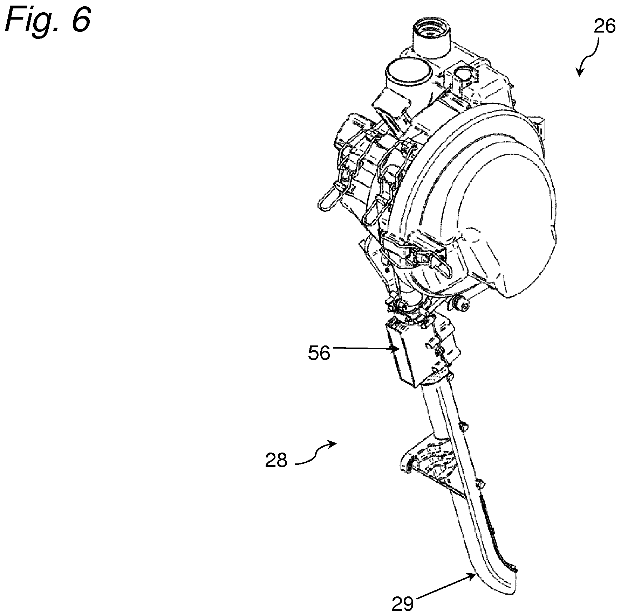

Aus der Perspektivansicht der Fig. 6 geht eine Aufführungsvariante einer Dosiervorrichtung 26 mit nachgeordnetem Saatflusssensor 56 und Saatrohr 28 hervor. Die dargestellte Dosiervorrichtung 26 arbeitet vorzugsweise nach dem Differenzdruckprinzip. Nachdem die Körner des Verteilguts vereinzelt wurden, werden diese an das Saatrohr 28 übergeben und mittels eines Saatflusssensors 56 gezählt, wodurch jeweils die Dosier- bzw. Vereinzelungsgenauigkeit überwacht wird. Das Saatrohr 28 weist einen geraden Bereich auf, in dessen Verlauf eine Krümmung anschließt. Es wäre jedoch auch denkbar, dass das Saatrohr 28 sichelförmig oder dergl. gebildet ist. Auch wäre es denkbar, dass das Saatrohr 28 als Schlauch oder dergl. Leitung gebildet ist. Wiederum vorstellbar wäre auch ein quadratisches, rechteckiges oder dergl. geformtes Saatrohr 28.

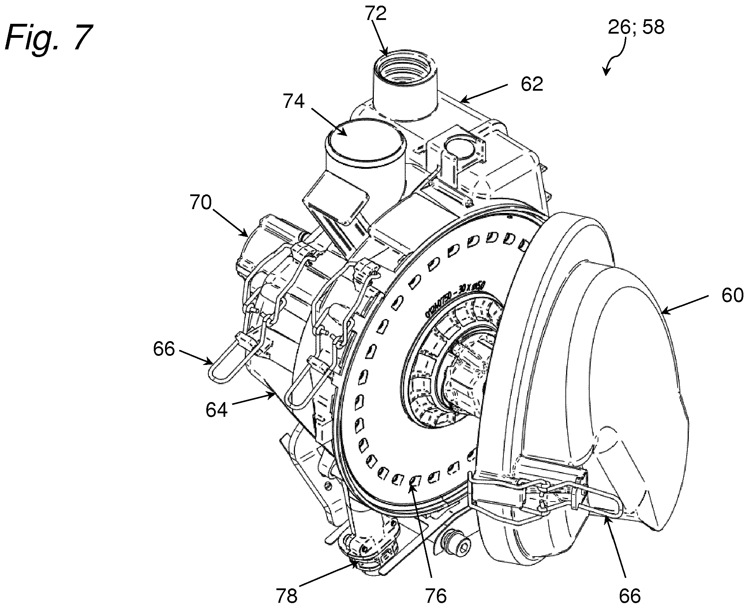

Aus der Perspektivansicht der Fig. 7 geht eine Dosiervorrichtung 26 hervor. Die Dosiervorrichtung 26 besteht im Wesentlichen aus einem Gehäuse 58, welches sich aus einem Deckel 60 sowie einer Kornzuführung 62 und einer Kornabgabe 64 zusammensetzt, wobei die Kornzuführung 62 und die Kornabgabe 64 mittels Verschlussgliedern 66 verbunden werden, sowie diese Einheit mit dem Deckel 60 wiederum mittels eines Verschlussgliedes 66 geschlossen werden kann, wobei zum besseren Verständnis der Deckel 60 in geöffneter Position dargestellt ist. Im Inneren des Gehäuses 58 ist ein rotierendes Dosierorgan 68 in Form einer Dosierscheibe 68 angebracht, welche mittels eines Motors 70 in Rotation gebracht wird. Neben der Ausführung als Dosierscheibe 68 könnte das Dosierorgan 68 bspw. auch als Trommel oder dergl. gebildet sein. Über die Kornzuführung 62 erfolgt über einen Saatanschluss 72 zum einen die Versorgung der Dosiervorrichtung 26 mit Verteilgut sowie über den Luftanschluss 74 die Beaufschlagung dieser bspw. mit einem Überdruck. Zur Vereinzelung des Verteilguts sind der Dosierscheibe 68 Öffnungen 76 zugeordnet, an welchen Öffnungen 76 mittels einer Druckdifferenz jeweils ein Korn des Verteilguts aufgenommen wird. Die Druckdifferenz wird hierbei ebenfalls mittels der Öffnungen 76 erzielt, da in der Kornzuführung 62 und in der Kornabgabe 64 eine Überdruckniveau anliegt und auf der gegenüberliegenden Seite ein geringeres Druckniveau, welches geringere Druckniveau durch eine Öffnung im Deckel 60 erzeugt wird. Durch Rotation des Dosierorgans 68 werden somit die an den Öffnungen 76 sich befindlichen Körner aus der Kornzuführung 62 in die Kornabgabe 64 transportiert, in welcher die Körner anschließend in einen der Kornabgabe 64 zugeordneten Saatrohrabschnitt 78 abgegeben werden.

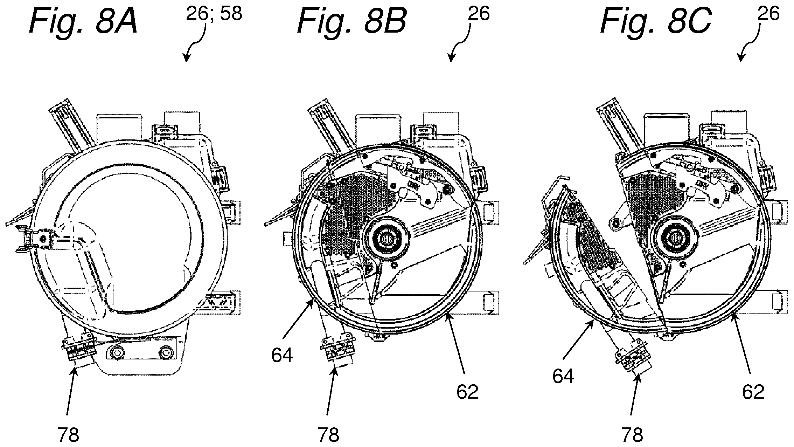

Dieser Aufbau der Dosiervorrichtung 26 geht aus den drei Seitenansichten der Figuren 8 noch näher hervor, wobei die Fig. 8A hierbei die Dosiervorrichtung 26 mit geschlossenem Gehäuse 58 und Deckel 60, die Fig. 8B lediglich die Kornzuführung 62 und die Kornabgabe 64, sowie die Fig. 8C die Kornzuführung 62 mit einer zu dieser verschwenkter Kornabgabe 64 zeigen. Der Kornabgabe 64 zugeordnet ist jeweils ein Saatrohrabschnitt 78. Durch einen derartigen Aufbau des Gehäuses 58 ist es daher möglich, die Kornabgabe 64 an das jeweilige Verteilgut anpassen zu können.

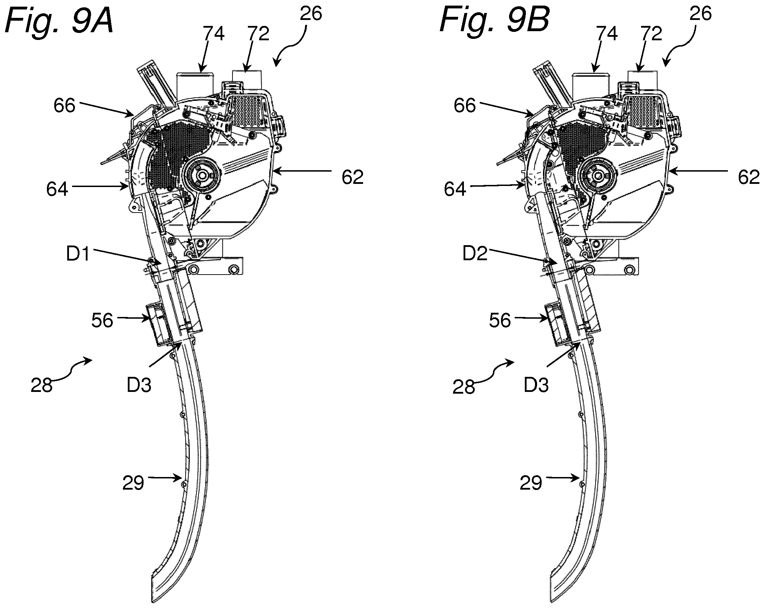

Die Auswechselbarkeit der Kornabgabe 64 geht aus den zwei Schnittansichten der Fig. 9 noch weiter hervor, wobei Fig. 9A diese mit einem ersten Querschnitt bzw. Durchmesser D1 des Saatrohrabschnitts 78 zeigt, sowie Fig. 9B diese mit einem größerem Querschnitt bzw. Durchmesser D2 des Saatrohrabschnitts 78. Um sowohl bei großen Körnern des Verteilguts sowie bei kleineren Körnern von Verteilgut jeweils eine optimale Abgabe bzw. einen optimalen Korntransport am Übergang von der Kornabgabe 64 hin zum Saatrohr 28 bzw. zum Saatrohrabschnitt 78 gewährleisten zu können, ist es erforderlich, die jeweiligen Querschnitte bzw. Durchmesser des Saatrohrabschnitts 78 auf die jeweilige Größe des Verteilguts anzupassen. Um dies mit einem möglichst geringen Aufwand zu erreichen, kann die jeweilige Kornabgabe 64 gewechselt werden. Weitere Komponenten wie bspw. der Saatflusssensor 56 oder die Kornzuführung 62 oder sonstige Elemente der Dosiervorrichtung 26 bzw. der Reiheneinheit 12 müssen nicht gewechselt oder geändert werden. Um eine schnelle und einen möglichst werkzeuglosen Wechsel zu erreichen, erfolgt die Montage bzw. Verbindung der Elemente insbesondere mittels handbetätigter Verschlussglieder 66.

Die Kornabgabe 64 kann somit entsprechend dem jeweiligen Verteilgut schnell auf dessen jeweiliger Korngröße angepasst werden. So besitzt der Saatrohrabschnitt 78, welcher Teil der Kornabgabe 64 sein kann, im Ausführungsbeispiel der Fig. 9A einen Querschnitt bzw. einen Durchmesser D1 von ca. 16mm und im Ausführungsbeispiel der Fig. 9B einen Querschnitt bzw. einen Durchmesser D2 von ca. 20mm, wobei diese auch entsprechend anders gewählt werden können. Im Saatflusssensor 56 bzw. im Saatrohrverlauf 29 nach dem Saatflusssensor 56 kann anschließend der Querschnitt bzw. der Durchmesser D3 unabhängig vom jeweils auszubringenden Verteilgut konstant bleiben und bspw. 20mm oder mehr betragen. Weitere Anpassungen außer dem Austausch der Kornabgabe sind erfindungsgemäß nicht erforderlich.

Das Saatrohr 28 der Figuren 9 ist jeweils sichelförmig gebildet. Es wären jedoch auch gerade Saatrohre 28 möglich. Auch denkbar wäre ein Saatrohr 28, welches zunächst einen geraden Verlauf aufweist und welches in Richtung zum Auslass des Saatrohrs 28 in eine bogenförmige Kontur übergeht.

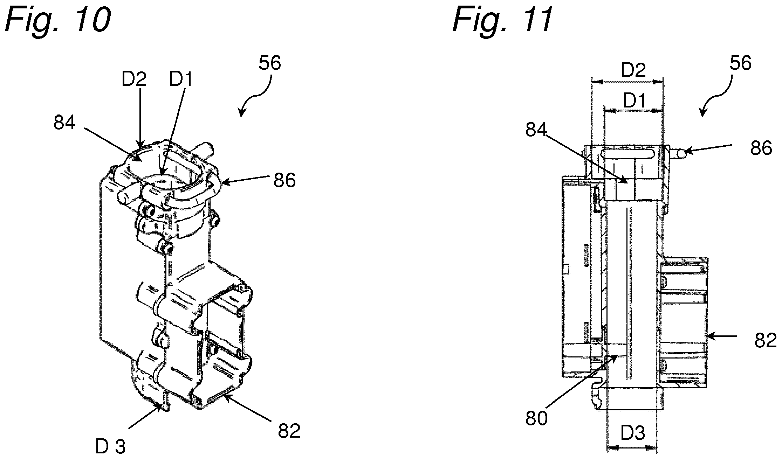

Einen vorzugsweise in der erfindungsgemäßen Reiheneinheit 12 eingesetzten Saatflusssensor 56 zeigt die Fig. 10 in einer Perspektivansicht sowie die Fig. 11 in einer Schnittdarstellung. Der Saatflusssensor 56 weist in dessen oberen Bereich zwei Taschen 84 mit unterschiedlichen Durchmessern D1 und D2 auf. Somit wird ermöglicht, dass verschiedene Saatrohrabschnitte 78 montiert werden können. Es wäre durchaus auch denkbar, den Saatflusssensor 56 mit noch weiteren Taschen 84 zu versehen, um noch weitere Saatrohrabschnitte 78 mit verschiedenen Durchmessern montieren zu können. Nach den verschiedenen Durchmessern D1 und D2 der Taschen 84 verjüngt sich der Durchmesser dieses weiter zu einem Durchmesser D3, wobei dieser in dessen Verlauf konstant bleibt. Der Durchmesser D3 könnte hierbei bspw. dem Innendurchmesser des Saatrohrabschnitts 78 entsprechen. Um den jeweiligen Saatrohrabschnitt 78 montieren zu können, ist der Saatflusssensor 56 mit einem Klemmbügel 86 versehen. Zur Ermittlung der Anzahl von den Saatflusssensor 56 passierenden Körner weist dieser einen Detektierabschnitt 80 bspw. in Form einer Lichtschranke oder einer Laserscanner oder dergl. auf. Auch andere körnerzählende Sensorelemente wären denkbar und einsetzbar. Der Detektierabschnitt 80 wird über eine Stromversorgung 82 mit der benötigten Energieversorgung verbunden. Durch eine derartige Gestaltung des Saatflusssensors 56 wird somit sichergestellt, dass dieser für verschiedenste Saatrohrabschnitte 78 bzw. Kornabgaben 64 geeignet ist, ohne diesen bei einem Verteilgutwechsel tauschen zu müssen.

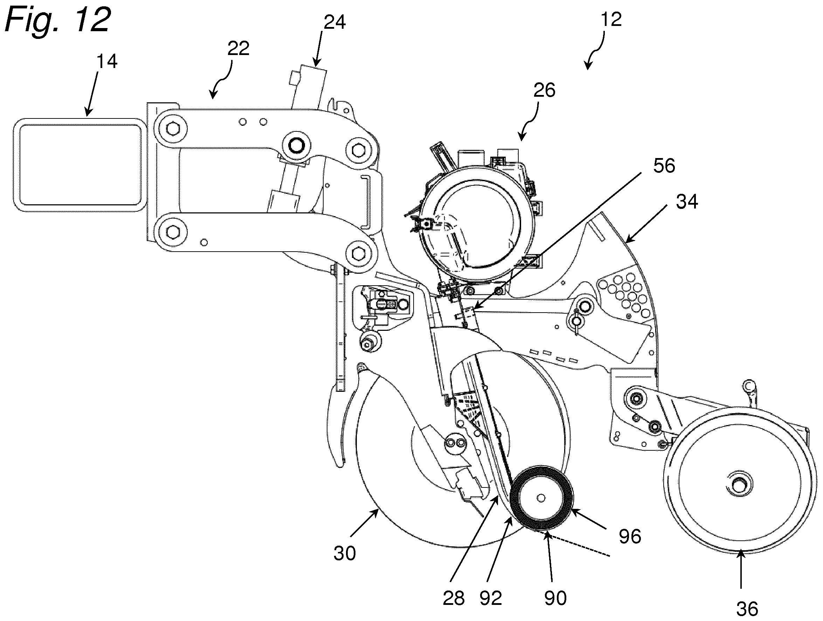

Eine weitere Ausführungsvariante einer Reiheinheit 12 geht aus den Seitenansichten der Figuren 12, 13, 14 und 15 hervor bei denen jeweils zum besseren Verständnis einige Teile ausgeblendet wurden. Der Reiheneinheit 12 ist hierbei eine Verzögerungseinheit 90 zugeordnet, welche durch mindestens eine drehbare Rolle ausgebildet ist. Die Reiheneinheit 12 besitzt ein Parallelogramm 22, mittels welchem diese schwenkbar an einem Rahmen 14 montiert werden kann. Die jeweilige Höhenposition sowie der Schardruck der Reiheneinheit 12 kann mittels eines Zylinders 24 eingestellt werden. Die Reiheneinheit 12 weist weiter als furchenziehende Werkzeuge zwei V-förmig zueinander angeordnete Sechscheiben 30 auf, wobei hier auch andere Werkzeuge wie Zinken oder nur eine Sechscheibe 30 vorstellbar wären. Zwischen den Sechscheiben 30 ist ein Saatrohr 28 abgebracht, mit welchem das von einer Dosiervorrichtung 26 weitgehend vereinzelte Verteilgut zur Saatfurche befördert wird. Die Dosiervorrichtung 26 kann hierbei verschiedenste Funktionsprinzipien aufweisen. So wären bspw. Differenzdrucksysteme denkbar. Auch wären mechanische- oder fliehkraftbasierte Systeme vorstellbar. Am hinteren Ende der Reiheneinheit 12 befinden sich noch zwei V-förmig zueinander angeordnete Druckrollen 36, mittels welchen zum einen die Saatfurche verschlossen und zum anderen das jeweilige Verteilgut im Boden angedrückt wird.

Dem Ausgang des Saatrohrs 28 bzw. im Bereich unmittelbar vor dem Ende des Saatrohrs 28 ist eine Verzögerungseinheit 90 derartig zugeordnet, dass das entlang des Saatrohrs 28 bzw. einer Gleitfläche 92 mit vorzugsweise erhöhter Geschwindigkeit beförderte Verteilgut von der Verzögerungseinheit 90 zugeordneten Kammern 94 oder Bürsten 96 aufgenommen wird und auf eine gewünschte Geschwindigkeit reduziert wird. Diese Geschwindigkeit ist hierbei bspw. derartig gewählt, dass das Verteilgut bei der Abgabe aus dem Saatrohr 28 in die Saatfurche mit einer Geschwindigkeit befördert wird, welche weitgehend identisch zur Fahrtgeschwindigkeit der Reiheinheit 12 ist. Ein Fangelement bzw. eine Fangrolle 38 ist somit nicht zwingend erforderlich (vergl. Fig. 3). Die Körner werden jeweils in Richtung der Saatfurche abgegeben, was mittels gestrichelter Linien angedeutet wird.

Das Verteilgut wird in der Kornabgabe 64 und/oder im Saatrohr 28 entweder mit dem in der Dosiervorrichtung 26 vorherrschenden Überdruck oder mittels einer Beschleunigungseinrichtung auf eine hohe Geschwindigkeit beschleunigt, welche Geschwindigkeit höher als die Erdbeschleunigung ist. Somit kann ein sicherer und reibungsloser Transport ohne Verspringen der Körner im Saatrohr 28 in Richtung zur Saatfurche gewährleistet werden. Um jedoch ein Verrollen bzw. Verspringen der Körner in der Saatfurche durch die erhöhte Transportgeschwindigkeit zu vermeiden, werden die Körner unmittelbar vor Abgabe dieser mittels einer Kammern 94 oder Bürsten 96 aufweisenden Verzögerungseinheit 90 abgebremst. Mittels der Verzögerungseinheit 90 wird somit eine Reiheneinheit 12 geschaffen, welche sowohl bei feuchten als auch bei nassen Bodenbedingungen eingesetzt werden kann, da kein Fangelement 38 für ein Abbremsen des mit erhöhter Geschwindigkeit durch das Saatrohr 28 beförderte Verteilguts erforderlich ist. Insbesondere wäre es auch denkbar, die Reiheneinheit 12 derartig zu gestalten, dass sowohl eine Fangrolle 38 als auch eine Verzögerungseinheit 90 in dieser montiert werden können.

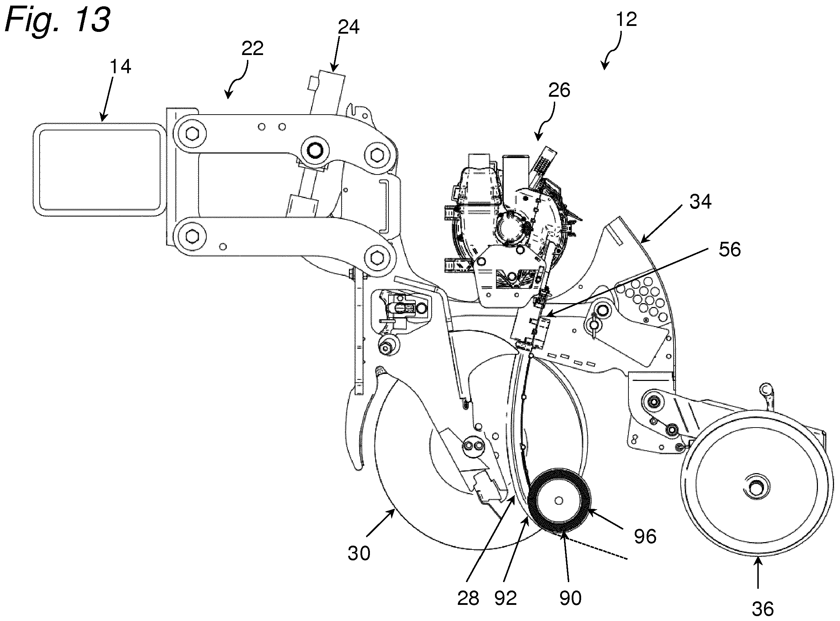

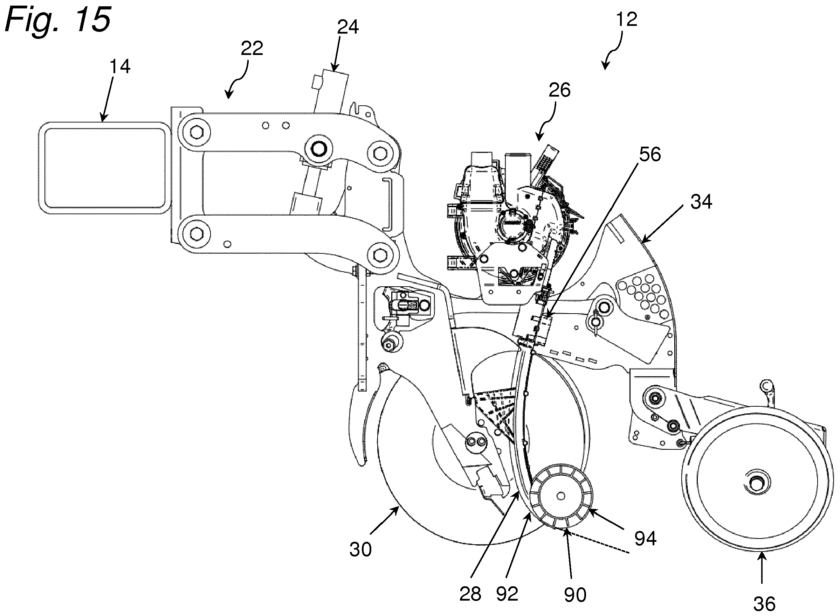

Die Verzögerungseinheit 90 kann sowohl bei einem sichelförmigen (vergl. Fig. 13, Fig. 15) als auch bei einem geraden mit anschließend bogenförmigen Saatrohr 28 verwendet werden, wobei die Form des Saatrohrs 28 hierbei jeweils entsprechend der Einbaurichtung der Dosiervorrichtung 26 angepasst werden kann.

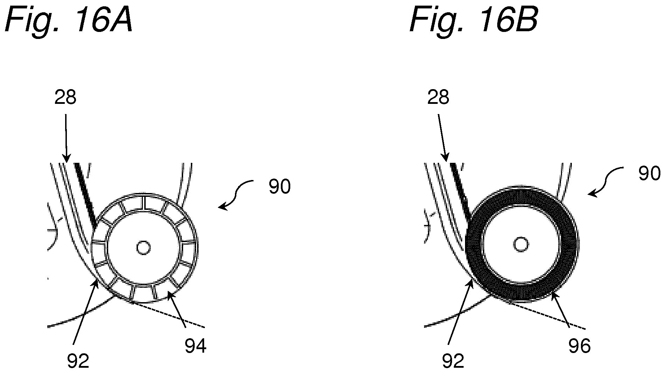

Aus den zwei Seitenansichten der Fig. 16 geht jeweils eine Detailansicht des Abgabebereichs hervor, wobei jeweils ein Saatrohr 28 mit Gleitfläche 92 und nachgeordneter Verzögerungseinheit 90 dargestellt ist. Gemäß Fig. 16A weist die Verzögerungseinheit 90 Kammern 94 und gemäß Fig. 16B Bürsten 96 auf.

Um eine reibungslose Übergabe der Körner aus dem Saatrohr 28 in die Verzögerungseinheit 90 zu gewährleisten, kann die Verzögerungseinheit 90 mittels geeigneten Synchronisierungseinheiten angesteuert werden. So wäre es bspw. denkbar aufgrund der Werte des Saatflusssensors 56 die jeweilige Position eines Korns des Verteilguts zu ermitteln und die Bewegung der Verzögerungseinheit 90 entsprechend anzupassen. Insbesondere kann die Drehgeschwindigkeit der Verzögerungseinheit 90 auf Basis einer Vorfahrtsgeschwindigkeit der Reiheneinheit 12 geregelt werden, so dass die Körner mittels der Verzögerungseinheit 90 auf eine Geschwindigkeit abgebremst werden, die weitgehend identisch zur Fahrtgeschwindigkeit der Reiheneinheit 12 ist.

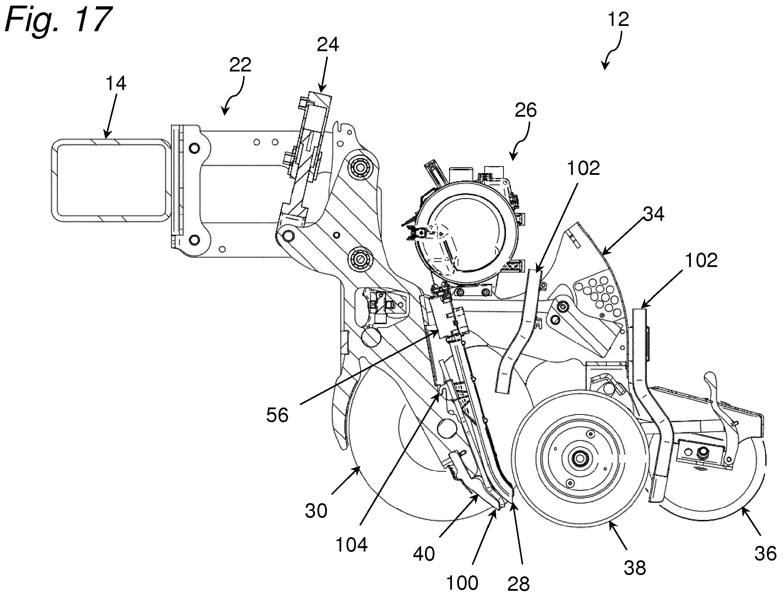

Eine weitere Ausführungsvariante einer Reiheneinheit 12 zeigt die Seitenansicht im Schnitt der Fig. 17. Die Reiheneinheit 12 besitzt ein Parallelogramm 22, mittels welchem diese schwenkbar an einem dargestellten Rahmen 14 montiert werden kann. Die jeweilige Höhenposition sowie der Schardruck der Reiheneinheit 12 kann mittels eines Zylinders 24 eingestellt werden. Die Reiheneinheit 12 weist weiter als furchenziehende Werkzeuge zwei V-förmig zueinander angeordnete Sechscheiben 30 auf, wobei hier auch andere Werkzeuge wie Zinken oder nur eine Sechscheibe 30 vorstellbar wäre. Zwischen den Sechscheiben 30 ist ein Saatrohr 28 abgebracht, mit welchem das von einer Dosiervorrichtung 26 weitgehend vereinzelte Verteilgut zur Saatfurche befördert wird. Die Dosiervorrichtung 26 kann hierbei verschiedenste Funktionsprinzipien aufweisen. So wären bspw. Differenzdrucksysteme denkbar. Auch wären mechanische- oder fliehkraftbasierte Systeme vorstellbar. Dem Ausgang des Saatrohrs 28 nachgeordnet ist ein Fangelement 38 in Form einer Fangrolle 38. Durch diese Fangrolle 38 soll zum einen das teilweise mit großer Geschwindigkeit durch das Saatrohr beförderte Verteilgut abgebremst bzw. ein Verrollen dieses in der Saatfurche verhindert werden und zum anderen das Verteilgut im Boden eingebettet werden. Am hinteren Ende der Reiheneinheit 12 befinden sich noch zwei V-förmig zueinander angeordnete Druckrollen 36, mittels welchen zum einen die Saatfurche verschlossen, und zum anderen das jeweilige Verteilgut im Boden angedrückt wird.

Um eine möglichst optimale Nährstoffversorgung für das Verteilgut zu erreichen, kann mit der Reiheneinheit 12 neben einer vereinzelten Kornabgabe auch noch eine Düngerabgabe erfolgen. Hierzu ist an der Reiheneinheit 12 wenigstens eine Ausbringleitung 100 vorgesehen, wobei diese Ausbringleitung 100 insbesondere für Flüssigdünger bzw. sonstige flüssige Stoffe vorgesehen ist. Die Ausbringleitung 100 könnte jedoch auch für das Ausbringen von Granulaten oder dergl. Verwendung finden. Neben der Ausbringleitung 100 können an der Reiheneinheit 12 noch weitere Leitungsabschnitte 102 vorhanden sein, um noch weitere Düngersorten und/oder noch weitere Saatgutsorten ausbringen zu können. Die Leitungsabschnitte 102 können an verschiedenen Stellen angebracht sein, wodurch in Abhängigkeit des jeweils auszubringenden Verteilguts die gewünschte Ausbringposition gewählt werden kann. Dies kann bspw. vor der Fangrolle 38 und zwischen den Sechscheiben 30 sein, aber auch im Bereich der Druckrollen 36. Auch andere Positionen wären denkbar.

Eine häufig in der Praxis gewählte Position für das Ausbringen des Düngers, insbesondere des Flüssigdüngers, ist unmittelbar am Auslass des Saatrohrs 28. Die Ausbringleitung 100 kann hierzu bspw. mittels eines Fixierelements 104 mit einem Scharrahmen 34 verbunden werden. Um die Ausbringleitung 100 jedoch sowohl gegen Verschleiß als auch gegen andere Beschädigungen zu schützen, ist dieses vorzugsweise zwischen der Kufe 40 und dem Saatrohr 28 angeordnet.

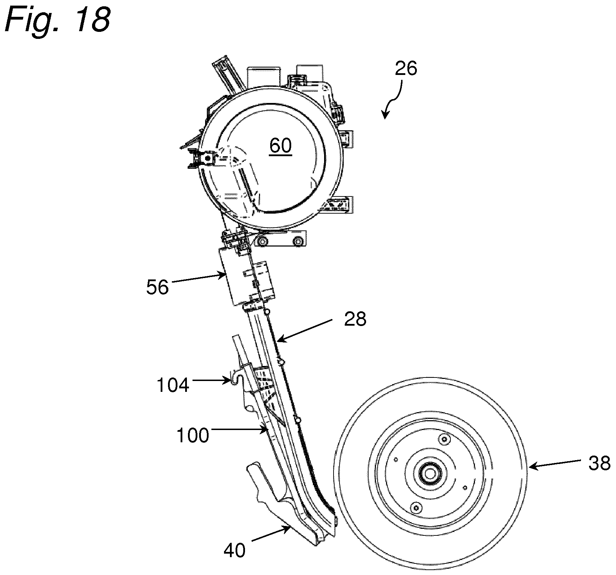

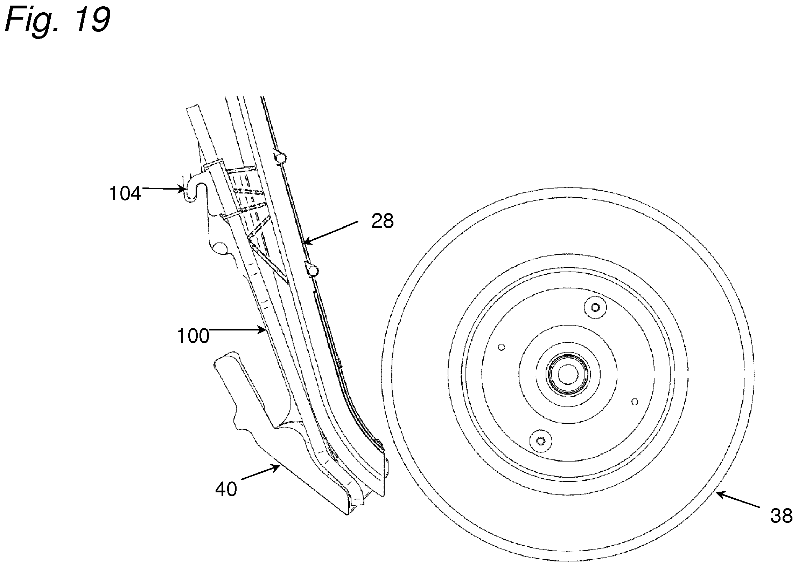

Aus den Detailansichten der Figuren 18 und 19 (jeweils dargestellt ohne eine Verzögerungseinheit 90) geht hierzu noch die genaue Anordnung des Saatrohrs 28, der Kufe 40 und der Ausbringleitung 100 hervor, wobei die Fig. 18 gegenüber der Fig. 19 hierbei noch zusätzlich eine Dosiervorrichtung 26 mit nachgeordnetem Saatflusssensor 56 und Saatrohr 28 zeigt. Die Ausbringleitung 100 ist vorzugsweise als Rohr oder Schlauchleitung ausgebildet, welche entsprechend der Kontur des Saatrohrs 28 entlang geformt bzw. gekantet sein kann, um somit eine platzsparende Anordnung der Ausbringleitung 100 zu erreichen.

Durch die Anordnung der Ausbringleitung 100 zwischen der Kufe 40 und dem Saatrohr 28 wird somit eine ackerbaulich weitgehend optimale Position erreicht. Zur Einbettung des Dünger- bzw. des Verteilguts sind keine weiteren Elemente außer je nach Bodenbedingungen evtl. eine Fangrolle 38 und/oder eine Druckrolle 36 erforderlich. Somit wird eine einfache, kompakte und kostengünstige Reiheneinheit 12 zur Verfügung gestellt.

Die Kufe 40 kann im Bereich der Ausbringleitung 100 sowie dem Saatrohr 28 eine Nut oder eine Aussparung oder einen Schlitz aufweisen, in welche die Ausbringleitung 100 und/oder das Saatrohr 28 zumindest abschnittsweise, insbesondere im Bereich der jeweiligen Dünger- bzw. Verteilgutabgabe hineinragen. Somit werden diese durch die Kufe 40 neben Beschädigungen und Verschleißerscheinungen in Fahrrichtung auch gegen derartige quer zur Fahrrichtung geschützt.

In einer weiteren Ausführungsvariante wäre es auch denkbar, dass die Dünger- und Verteilgutabgabe in die Kufe 40 integriert ist und die Ausbringleitung 100 und/oder das Saatrohr 28 bspw. in diese hineingesteckt werden oder anderweitig mit der Kufe 40 verbunden werden.

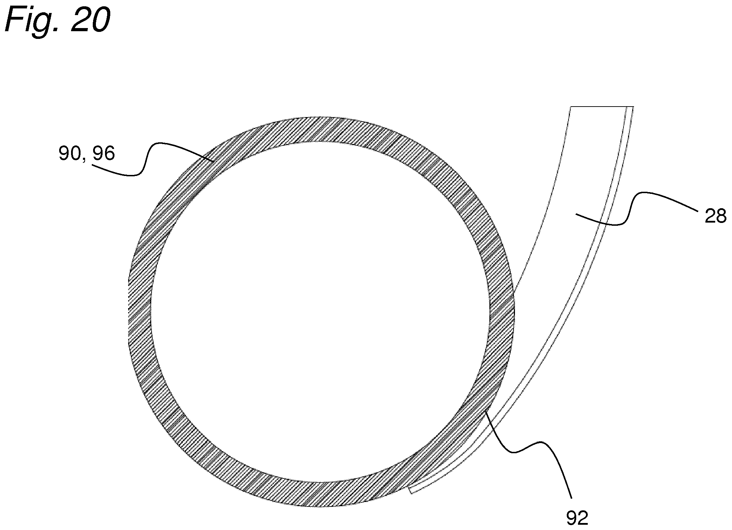

Die Figuren 20 bis 22 zeigen jeweils weitere Ausführungsformen des Saatrohrs 28. Gemäß Fig. 20 ist das Saatrohr 28 keilförmig ausgebildet und bildet damit eine keilförmige Gleitfläche 92 aus. Das Verteilgut wird somit entlang der Gleitfläche 92 in Richtung zu einer nachgeordneten Verzögerungseinheit 90 geleitet, welche als drehbare Rolle in Form von einer Bürste 96 ausgebildet ist. Die Verzögerungseinheit 90 ist in Bezug auf die Gleitfläche 92 des Saatrohrs 28 derartig angeordnet, dass der Umfang der Bürste 96 entlang der keilförmigen Gleitfläche 92 des Saatrohrs 28 rotiert. Das Saatrohr 28 weist ein freies und ein in Richtung des Bodens orientiertes Ende auf, welches etwa im unteren Bereich der Verzögerungseinheit 90 endet bzw. in dieses übergeht.

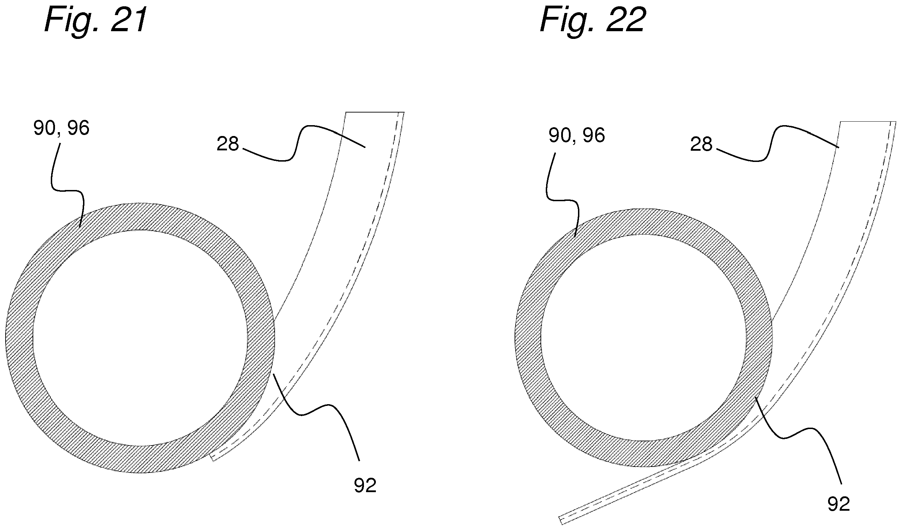

Gemäß den in den Figuren 21 und 22 gezeigten Ausführungsvarianten kann das Saatrohr 28 jeweils durch eine Saatrohrrinne ausgebildet sein, welche jeweils an die Außenkontur der Verzögerungseinheit 90 angepasst bzw. entsprechend geformt ist. Damit kann die Verzögerungseinheit 90 mit ihrem Außenumfang entlang einer Gleitfläche 92 der Saatrohrrinne rotieren. Die Verzögerungseinheit 90 ist jeweils durch eine drehbare Rolle in Form von einer Bürste 96 ausgebildet, mittels welcher das entlang der Saatrohrrinne bewegte Verteilgut auf eine definierte Geschwindigkeit abgebremst wird. Die Saatrohrrinne hat je nach Ausführungsform eine unterschiedliche Länge. Die Saatrohrrinne weist entlang der Längserstreckung ein freies Ende auf, welches zum Boden gerichtet ist. Das freie Ende der Saatrohrrinne gemäß Fig. 21 endet circa im unteren Bereich der Verzögerungseinheit 90 und schließt mit dieser ab. Das freie Ende der Saatrohrrinne gemäß Fig. 22 ragt über den Umfang bzw. über die Außenkontur der Verzögerungseinheit 90 hinaus. Damit ist die Saatrohrrinne gemäß Fig. 22 länger ausgebildet aus bei Fig. 21.

Der in den Figuren 20, 21 und 22 erkennbare und als keilförmige Gleitfläche 92 bezeichnete Übergangsbereich, wo die im Saatrohr geförderten Körner des Verteilgutes tangential auf die rotierende Verzögerungseinheit 90 treffen und in deren Außenumfang hineintreten bzw. dort durch die Bürsten, Kammern und/oder elastischen Bereiche aufgenommen werden, dient in erster Linie einer nicht zu abrupten Kontaktierung der Verzögerungseinheit 90 durch die Körner des Verteilgutes, die durch die keilförmige Gleitfläche 92 relativ weich abgebremst werden, ohne dass die Gefahr eines Abprallens oder einer anderen unkontrollierten Bewegungskomponente auftritt. Die keilförmige Gleitfläche 92 kann in den gezeigten Seitenansichten eine solche keilförmige Kontur aufweisen, wobei jedoch auch eine Verzögerungseinheit 90 mit abgerundeten äußeren Kanten vorstellbar bzw. wünschenswert ist, die mit einer entsprechend rinnenförmigen oder hohlkehlenartigen Kontur des Saatrohrs 28 zumindest in dem Kontaktbereich mit der Verzögerungseinheit 90 korrespondieren und/oder dort aufgenommen sein kann, so dass der gewünschte tangentiale Übergangsbereich zwischen Saatrohr 28 und Verzögerungseinheit 90 hergestellt und gebildet wird.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: landwirtschaftliche Maschine
- 12: Reiheneinheit
- 14: Rahmen
- 16: Zugvorrichtung
- 18: Rad
- 20: Vorratsbehälter
- 22: Parallelogramm
- 24: Zylinder
- 26: Dosiervorrichtung
- 28: Saatrohr
- 29: Saatrohrverlauf
- 30: Sechscheibe, furchenziehendes Werkzeug
- 32: Tiefenführungsrolle, Tiefenführungsrad
- 34: Scharrahmen
- 36: Druckrolle
- 38: Fangelement, Fangrolle
- 40: Kufe
- 42: Verriegelungselement
- 44: vordere Führungsfläche
- 46: hintere Führungsfläche
- 48: Absatz
- 50: Aufnahmeöffnung
- 51: Anschlagfläche
- 52: Drehpunkt
- 54: Steg
- 56: Saatflusssensor
- 58: Gehäuse
- 60: Deckel
- 62: Kornzuführung
- 64: Kornabgabe
- 66: Verschlussglied
- 68: Dosierscheibe, Dosierorgan
- 70: Motor
- 72: Saatanschluss
- 74: Luftanschluss
- 76: Öffnung
- 78: Saatrohrabschnitt
- 80: Detektierabschnitt
- 82: Stromversorgung
- 84: Tasche
- 86: Klemmbügel

- 90: Verzögerungseinheit
- 92: Gleitfläche
- 94: Kammer
- 96: Bürste

- 100: Düngerleitung
- 102: Leitungsabschnitt
- 104: Fixierelement

## Patentansprüche

1. Reiheneinheit (12) einer landwirtschaftlichen Maschine (10) zur Verteilung von granulatartigem Verteilgut wie Saatgut und/oder Dünger, umfassend zumindest:
- einen die Komponenten der Reiheneinheit (12) tragenden Scharrahmen (34),
- eine mit Überdruck arbeitende und/oder auf einem Überdruckprinzip basierende pneumatische Dosiervorrichtung (26) zur vereinzelten Abgabe von Verteilgut,
- furchenziehende Werkzeuge (30), insbesondere in Form zweier in einem Winkel zueinander angeordneter Sechscheiben (30), wobei ein Saatrohr (28) zwischen und/oder neben diesen angeordnet ist,
- eine dem Saatrohr (28) zugeordnete Verzögerungseinheit (90), welche durch mindestens eine drehbare Rolle mit Bürsten und/oder mit Kammern und/oder mit elastischen Bereichen aus flexiblem und/oder weichem Material gebildet ist,
- eine die Saatfurche schließende Druckrolle (36),
**dadurch gekennzeichnet, dass** das Verteilgut zwischen der Abgabe vom Dosierorgan (68) und der Abgabe aus dem Saatrohr (28) mittels des in der Dosiervorrichtung vorherrschenden Überdrucks eine aktive Beschleunigung erfährt und mit erhöhter Geschwindigkeit entlang des Saatrohrs (28) transportiert wird,
dass das Verteilgut vor Abgabe in die Saatfurche mittels der Verzögerungseinheit (90) eine aktive Abbremsung erfährt,
und dass das Saatrohr (28) eine Gleitfläche (92) aufweist, entlang derer das Verteilgut in Richtung zur Verzögerungseinheit (90) gleitet, wobei die Verzögerungseinheit (90) in Bezug auf diese derartig angeordnet ist, dass der Umfang der Kammern (94) und/oder Bürsten (96) entlang der Gleitfläche (92) rotiert.

2. Reiheneinheit nach Anspruch 1, bei der das Verteilgut zunächst mittels eines Luftvolumenstroms aufgrund des durch den in der Dosiervorrichtung vorherrschenden Überdrucks auf eine Geschwindigkeit beschleunigt wird, welche größer als die Erdbeschleunigung ist und dieses mittels der Verzögerungseinheit (90) auf eine Geschwindigkeit abgebremst wird, welche weitgehend identisch zur Fahrtgeschwindigkeit der Reiheneinheit (12) ist.

3. Reiheneinheit nach Anspruch 1 oder 2, bei der das Saatrohr (28) sichelförmig oder gerade ausgebildet ist, oder bei der das Saatrohr (28) einen geraden Abschnitt aufweist, an den sich ein bogenförmiger Abschnitt anschließt.

4. Reiheneinheit nach Anspruch 1 oder 2, bei der das Saatrohr (28) keilförmig oder mit sich verjüngendem Querschnitt ausgebildet ist, wodurch eine keilförmige Gleitfläche (92) gebildet ist.

5. Reiheneinheit nach einem der vorhergehenden Ansprüche, bei der das Saatrohr (28) zumindest abschnittsweise durch eine Saatrohrrinne ausgebildet ist, welche Saatrohrrinne an die Außenkontur der Verzögerungseinheit (90) angepasst ist oder mit der Außenkontor der Verzögerungseinheit (90) korrespondiert.

6. Reiheneinheit nach einem der vorhergehenden Ansprüche, bei der das Saatrohr (28) entlang seiner Längserstreckung ein freies Ende aufweist, welches mit der Verzögerungseinheit (90) abschließt bzw. tangential in diese übergeht oder über die Verzögerungseinheit (90) hinausgeht.

7. Reiheneinheit nach einem der Ansprüche 1 bis 6, bei der die Verzögerungseinheit (90) mittels eines Bodenantriebs oder mittels eines elektrisch oder hydraulisch arbeitenden Motors oder mittels eines Nabenantriebs und/oder eines Direktantriebs angetrieben wird.

8. Reiheneinheit nach einem der Ansprüche 1 bis 6, bei der die Bewegung der Sechscheibe (30) oder des Tiefenführungsrads (32) oder der Druckrolle (36) auf die Verzögerungseinheit (90) übertragen wird/werden.

9. Reiheneinheit nach einem der Ansprüche 1 bis 6, bei der die Reiheneinheit (12) eine zusätzliche Rolle zur Geschwindigkeitsübertragung auf die Verzögerungseinheit (90) aufweist.

10. Reiheneinheit nach einem der vorhergehenden Ansprüche, bei der die Drehgeschwindigkeit der Verzögerungseinheit (90) auf Basis der Vorfahrtsgeschwindigkeit der Reiheneinheit (12) geregelt wird oder regelbar ist.

11. Reiheneinheit nach einem der vorhergehenden Ansprüche, bei der an der landwirtschaftlichen Maschine (10) und/oder an der Reiheneinheit (12) Geschwindigkeitsaufnehmer angebracht sind, wobei die durch diese ermittelte Geschwindigkeit der Reiheneinheit (12) mittels einer Rechnereinheit in eine Drehgeschwindigkeit der Verzögerungseinheit (90) umgerechnet wird.

12. Landwirtschaftliche Maschine (10) zur Verteilung von granulatartigem Verteilgut wie Saatgut und/oder Dünger, die mindestens zwei, insbesondere eine Mehrzahl von in regelmäßigen Abständen nebeneinander oder versetzt nebeneinander angeordnete Reiheneinheiten (12) gemäß einem der Ansprüche 1 bis 11 aufweist.

13. Verfahren zum Betreiben einer landwirtschaftlichen Maschine (10), die mit mindestens einer Reiheneinheit (12) zur Verteilung von granulatartigem Verteilgut wie Saatgut und/oder Dünger ausgestattet ist, wobei die Komponenten der Reiheneinheit (12) einem tragenden Scharrahmen (34) zugeordnet sind, wobei die Reiheneinheit eine mit Überdruck arbeitende und/oder auf einem Überdruckprinzip basierende pneumatische Dosiervorrichtung (26) zur vereinzelten Abgabe von Verteilgut sowie furchenziehende Werkzeuge (30), insbesondere in Form zweier in einem Winkel zueinander angeordneter Sechscheiben (30), umfasst, und wobei ein Saatrohr (28) zwischen und/oder neben den furchenziehenden Werkzeugen und/oder den Sechscheiben (30) angeordnet ist,
wobei die Reiheneinheit eine dem Saatrohr (28) zugeordnete Verzögerungseinheit (90) und eine die Saatfurche schließende Druckrolle (36) umfasst, wobei die Verzögerungseinheit durch mindestens eine drehbare Rolle mit Bürsten und/oder mit Kammern und/oder mit elastischen Bereichen aus flexiblem und/oder weichem Material gebildet ist,
**dadurch gekennzeichnet, dass** das Verteilgut zwischen der Abgabe vom Dosierorgan (68) und der Abgabe aus dem Saatrohr (28) mittels des in der Dosiervorrichtung vorherrschenden Überdrucks aktiv beschleunigt und mit erhöhter Geschwindigkeit entlang des Saatrohrs (28) transportiert wird, wonach das Verteilgut auf seinem weiteren Transportweg vor der Abgabe in die Saatfurche mittels der Verzögerungseinheit (90) aktiv abgebremst wird,
und dass das Saatrohr (28) eine Gleitfläche (92) aufweist, entlang derer das Verteilgut in Richtung zur Verzögerungseinheit (90) gleitet, wobei die Verzögerungseinheit (90) in Bezug auf diese derartig angeordnet ist, dass der Umfang der Kammern (94) und/oder Bürsten (96) entlang der Gleitfläche (92) rotiert.

14. Verfahren nach Anspruch 13, das mit einer Reiheneinheit gemäß einem der Ansprüche 1 bis 11 und/oder mit einer landwirtschaftlichen Maschine (10) durchgeführt wird.

## Claims

1. A row unit (12) of an agricultural machine (10) for distributing granular-type distribution goods, such as seeds and/or fertiliser, the row unit (12) comprising at least:
- a coulter frame (34) carrying the components of the row unit (12);
- a pneumatic metering device (26) for single-granule-type dispensing of distribution goods, the pneumatic metering device (26) operating with positive pressure and/or being based on the principle of positive pressure;
- furrow-making implements (30), in particular in the form of two coulter disks (30) disposed at an angle in relation to each other, wherein a seed tube (28) is disposed between and/or next to said coulter disks (30);
- a delay unit (90) associated with the seed tube (28), the delay unit (90) being formed by at least one rotatable roll with brushes and/or with chambers and/or with elastic areas of flexible and/or soft material;
- a pressure roller (36) closing the seed furrow;
**characterised in that** the distribution goods undergo an active acceleration by means of the positive pressure prevailing in the metering device and are transported at an increased speed along the seed tube (28) between being dispensed from the metering organ (68) and being dispensed out of the seed tube (28);
**in that** the distribution goods undergo an active deceleration by means of the delay unit (90) before being dispensed into the seed furrow;
and **in that** the seed tube (28) has a slide surface (92) along which the distribution goods slide toward the delay unit (90), wherein the delay unit (90) is disposed in relation to the slide surface (92) in such a manner that the circumference of the chambers (94) and/or brushes (96) rotates along the slide surface (92).

2. The row unit as recited in claim 1, with the distribution goods first being accelerated by means of an air volume flow due to the positive pressure prevailing in the metering device to a speed that is greater than the acceleration of gravity, and with the distribution goods being decelerated by means of the delay unit (90) to a speed that is largely identical to the driving speed of the row unit (12).

3. The row unit as recited in claim 1 or 2, with the seed tube (28) being designed to be crescent-shaped or straight, or with the seed tube (28) having a straight section to which an arc-shaped section connects.

4. The row unit as recited in claim 1 or 2, with the seed tube (28) being designed to be wedge-shaped or with a tapering cross section, whereby a wedge-shaped slide surface (92) is formed.

5. The row unit as recited in one of the previous claims, with the seed tube (28) being at least in some sections formed by a seed tube channel that is adapted to the outer contour of the delay unit (90) or that corresponds to the outer contour of the delay unit (90).

6. The row unit as recited in one of the previous claims, with the seed tube (28) having a free end along its longitudinal extension, which free end terminates with the delay unit (90) or tangentially merges thereinto or goes beyond the delay unit (90), as the case may be.

7. The row unit as recited in one of the claims 1 to 6, with the delay unit (90) being driven by means of a ground drive or by means of an electrically or hydraulically operating motor or by means of a hub drive and/or by means of a direct drive.

8. The row unit as recited in one of the claims 1 to 6, with the movement of the coulter disk (30) or of the depth control wheel (32) or of the pressure roller (36) being transmitted to the delay unit (90).

9. The row unit as recited in one of the claims 1 to 6, with the row unit (12) having an additional roll for speed transmission to the delay unit (90).

10. The row unit as recited in one of the previous claims, with the rotation speed of the delay unit (90) being regulated or regulatable based on the forward speed of the row unit (12).

11. The row unit as recited in one of the previous claims, with velocity receivers being mounted on the agricultural machine (10) and/or on the row unit (12), wherein the speed of the row unit (12) detected by said velocity receivers is converted to a rotation speed of the delay unit (90) by means of a computer unit.

12. An agricultural machine (10) for distributing granular-type distribution goods, such as seeds and/or fertiliser, that has at least two, in particular, a plurality of row units (12) as recited in one of the claims 1 to 11 disposed regularly spaced adjacent to one another or offset adjacent to one another.

13. A method for operating an agricultural machine (10) that is equipped with at least one row unit (12) for distributing granular-type distribution goods, such as seeds and/or fertiliser, wherein the components of the row unit (12) are associated with a carrying coulter frame (34); wherein the row unit comprises a pneumatic metering device (26) for single-granule-type dispensing of distribution goods, the pneumatic metering device (26) operating with positive pressure and/or being based on the principle of positive pressure; and also comprises furrow-making implements (30), in particular, in the form of two coulter disks (30) disposed at an angle in relation to each other; and wherein a seed tube (28) is disposed between and/or next to the furrow-making implements and/or to the coulter disks (30);
wherein the row unit comprises a delay unit (90) associated with the seed tube (28) and a pressure roller (36) closing the seed furrow; wherein the delay unit is formed by at least one rotatable roll with brushes and/or with chambers and/or with elastic areas of flexible and/or soft material;
**characterised in that** the distribution goods are actively accelerated by means of the positive pressure prevailing in the metering device and are transported at an increased speed along the seed tube (28) between being dispensed from the metering organ (68) and being dispensed out of the seed tube (28), whereafter the distribution goods are actively decelerated by means of the delay unit (90) on their further transport path before being dispensed into the seed furrow;
and **in that** the seed tube (28) has a slide surface (92) along which the distribution goods slide toward the delay unit (90), wherein the delay unit (90) is disposed in relation to the slide surface (92) in such a manner that the circumference of the chambers (94) and/or brushes (96) rotates along the slide surface (92).

14. The method as recited in claim 13 that is carried out with a row unit as recited in one of the claims 1 to 11 and/or with an agricultural machine (10).

## Revendications

1. Unité en lignes (12) d'une machine agricole (10) destinée à distribuer des matières à distribuer de type granulés, telles que les semences et/ou les engrais, comprenant au moins:
- un cadre de soc (34) portant les composants de l'unité en lignes (12),
- un dispositif de dosage (26) pneumatique qui travaille à surpression et/ou est basé sur un principe de surpression et qui est destiné à distribuer de façon individualisée des matières à distribuer,
- des outils silloneurs (30), en particulier sous forme de deux disques de coutre (30) disposés à un angle l'un par rapport à l'autre, un tube à graines (28) étant disposé entre et/ou à côté de ceux-ci,
- une unité de décélération (90) qui est associée au tube à graines (28) et qui est constituée par au moins un rouleau tournant à brosses et/ou à chambres et/ou à zones élastiques en matériau flexible et/ou souple,
- un rouleau presseur (36) fermant le sillon à graines,
**caractérisée par le fait que**, entre l'action d'être distribuées par l'organe de dosage (68) et l'action de sortir du tube à graines (28), les matières à distribuer sont soumises à une accélération active au moyen de la surpression régnant à l'intérieur du dispositif de dosage et sont transportées à une vitesse élevée le long du tube à graines (28),
que les matières à distribuer sont soumises à une décélération active au moyen de l'unité de décélération (90) avant d'être distribuées dans le sillon à graines,
et que le tube à graines (28) présente une surface de glissement (92) le long de laquelle les matières à distribuer glissent en direction de l'unité de décélération (90), ladite unité de décélération (90) étant disposée par rapport à celle-ci de telle manière que la circonférence des chambres (94) et/ou brosses (96) tourne le long de la surface de glissement (92).

2. Unité en lignes selon la revendication 1, dans laquelle, d'abord, les matières à distribuer sont accélérées au moyen d'un courant de volume d'air, en raison de la surpression régnant à l'intérieur du dispositif de dosage, de manière à atteindre une vitesse qui est supérieure à l'accélération terrestre, et elles sont freinées au moyen de l'unité de décélération (90) de manière à avoir une vitesse qui est dans une large mesure identique à la vitesse de marche de l'unité en lignes (12).

3. Unité en lignes selon la revendication 1 ou 2, dans laquelle le tube à graines (28) est réalisé en forme de croissant ou de manière droite, ou dans laquelle le tube à graines (28) comprend une section droite qui est suivie d'une section en arc.

4. Unité en lignes selon la revendication 1 ou 2, dans laquelle le tube à graines (28) est réalisé en forme de coin ou avec une section transversale se rétrécissant, ce par quoi une surface de glissement (92) en coin est formée.

5. Unité en lignes selon l'une quelconque des revendications précédentes, dans laquelle ledit tube à graines (28) est formé, au moins par sections, par une rigole de tube à graines, laquelle rigole de tube à graines est adaptée au contour extérieur de l'unité de décélération (90) ou correspond au contour extérieur de l'unité de décélération (90).

6. Unité en lignes selon l'une quelconque des revendications précédentes, dans laquelle le tube à graines (28) présente une extrémité libre le long de son extension longitudinale, qui se termine par l'unité de décélération (90) ou bien débouche tangentiellement dans celle-ci ou s'étend au-delà de l'unité de décélération (90).

7. Unité en lignes selon l'une quelconque des revendications 1 à 6, dans laquelle ladite unité de décélération (90) est entraînée au moyen d'un entraînement par la roue ou au moyen d'un moteur travaillant de façon électrique ou hydraulique ou au moyen d'un entraînement sur moyeu et/ou d'un entraînement direct.

8. Unité en lignes selon l'une quelconque des revendications 1 à 6, dans laquelle le mouvement du disque de coutre (30) ou de la roue de guidage en profondeur (32) ou du rouleau presseur (36) est/sont transmis à l'unité de décélération (90).

9. Unité en lignes selon l'une quelconque des revendications 1 à 6, dans laquelle ladite unité en lignes (12) présente un rouleau supplémentaire pour la transmission de vitesse à l'unité de décélération (90).

10. Unité en lignes selon l'une quelconque des revendications précédentes, dans laquelle la vitesse de rotation de l'unité de décélération (90) est réglée ou réglable sur la base de la vitesse d'avance de l'unité en lignes (12).

11. Unité en lignes selon l'une quelconque des revendications précédentes, dans laquelle des capteurs de vitesse sont montés sur la machine agricole (10) et/ou sur l'unité en lignes (12), dans laquelle la vitesse de l'unité en lignes (12), qui est déterminée par ceux-ci est convertie au moyen d'une unité de calcul en une vitesse de rotation de l'unité de décélération (90).

12. Machine agricole (10) destinée à la distribution de matières à distribuer de type granulés, telles que les semences et/ou les engrais, qui présente au moins deux, en particulier une pluralité d'unités en lignes (12) selon l'une quelconque des revendications 1 à 11, qui sont disposées à intervalles égaux les uns à côté des autres ou à décalage les uns à côté des autres.

13. Procédé pour faire fonctionner une machine agricole (10) qui est équipée d'au moins une unité en lignes (12) pour la distribution de matières à distribuer de type granulés, telles que les semences et/ou les engrais, dans lequel les composants de l'unité en lignes (12) sont associés à un cadre de soc (34) porteur, dans lequel ladite unité en lignes comprend un dispositif de dosage (26) pneumatique qui travaille à surpression et/ou est basé sur un principe de surpression et qui est destiné à distribuer de façon individualisée des matières à distribuer, ainsi que des outils silloneurs (30), en particulier sous forme de deux disques de coutre (30) disposés à un angle l'un par rapport à l'autre, et dans lequel un tube à graines (28) est disposé entre et/ou à côté des outils silloneurs et/ou des disques de coutre (30),
dans lequel ladite unité en lignes comprend une unité de décélération (90) qui est associée au tube à graines (28) ainsi qu'un rouleau presseur (36) fermant le sillon à graines, ladite unité de décélération étant constituée par au moins un rouleau tournant à brosses et/ou à chambres et/ou à zones élastiques en matériau flexible et/ou souple,
**caractérisé par le fait que**, entre l'action d'être distribuées par l'organe de dosage (68) et l'action de sortir du tube à graines (28), les matières à distribuer sont accélérées de manière active au moyen de la surpression régnant à l'intérieur du dispositif de dosage et sont transportées à une vitesse élevée le long du tube à graines (28), ce après quoi les matières à distribuer, en continuant leur chemin de transport, sont freinées activement au moyen de l'unité de décélération (90) avant d'être distribuées dans le sillon à graines,
et que le tube à graines (28) présente une surface de glissement (92) le long de laquelle les matières à distribuer glissent en direction de l'unité de décélération (90), ladite unité de décélération (90) étant disposée par rapport à celle-ci de telle manière que la circonférence des chambres (94) et/ou brosses (96) tourne le long de la surface de glissement (92).

14. Procédé selon la revendication 13, qui est mis en oeuvre avec une unité en lignes selon l'une quelconque des revendications 1 à 11 et/ou avec une machine agricole (10).
